# FASCICULE DE BREVET EUROPEEN

(11) **EP 3 053 328 B1**
(45) Date de publication et mention de la délivrance du brevet: **06.11.2019**
(21) Numéro de dépôt: 14796174.2
(22) Date de dépôt: 19.09.2014
(51) Int. Cl.: H04L 29/12, H04L 12/64

(54) **PROCÉDÉ DE CONFIGURATION, PROCÉDÉ DE GESTION D'UN RÉSEAU IP, DISPOSITIFS CORRESPONDANT ET PROGRAMME D'ORDINATEUR ET MOYEN DE STOCKAGE**
KONFIGURIERUNGSVERFAHREN, IP NETZWERKVERWALTUNGSVERFAHREN SOWIE KORRESPONDIERENDE VORRICHTUNGEN, COMPUTERPROGRAMM UND SPEICHERMEDIUM
METHOD FOR CONFIGURATION AND METHOD FOR IP NETWORK MANAGEMENT, CORRESPONDING DEVICES, COMPUTER PROGRAM AND STORAGE MEDIUM

(30) Priorité: 30.09.2013 FR 1359434
(43) Date de publication de la demande: 10.08.2016
(73) Titulaire: Orange, 75015 Paris (FR)
(72) Inventeur: BOUCADAIR, Mohamed, 35830 Betton (FR)
(74) Mandataire: Vidon Brevets & Stratégie
(86) Numéro de dépôt international: PCT/FR2014/052329
(87) Numéro de publication internationale: WO 2015/044565

(56) Documents cités:
- WO-A1-01/86908
- WO-A2-01/19025
- FR-A1- 2 843 266
- US-A1- 2013 103 836
- MCAULEY A J ET AL: "Self-configuring networks", MILCOM 2000. 21ST CENTURY MILITARY COMMUNICATIONS CONFERENCE PROCEEDIN GS 22-25 OCTOBER 2000, PISCATAWAY, NJ, USA,IEEE, vol. 1, 22 octobre 2000 (2000-10-22), pages 315-319, XP010532606, DOI: 10.1109/MILCOM.2000.904966 ISBN: 978-0-7803-6521-6
- N/A: "Efficient Address Assignment Mesh Nodes In Real Time ; 15-05-0700-00-0005-efficient-address-assig nment-mesh-nodes-in-real-time", IEEE DRAFT; 15-05-0700-00-0005-EFFICIENT-ADDRESS-ASSIG NMENT-MESH-NODES-IN-REAL-TIME, IEEE-SA MENTOR, PISCATAWAY, NJ USA, vol. 802.155, 17 November 2005 (2005-11-17), pages 1-30, XP017669767, [retrieved on 2005-11-17]
- KYUNG-JIN LEE ET AL: "Management of PDP/PEP for PBNM in MANETs", NETWORK OPERATIONS AND MANAGEMENT SYMPOSIUM, 2006. NOMS 2006. 10TH IEE E/IFIP VANCOUVER, BC, CANADA 03-07 APRIL 2006, PISCATAWAY, NJ, USA,IEEE, 3 April 2006 (2006-04-03), pages 1-4, XP010935785, DOI: 10.1109/NOMS.2006.1687656 ISBN: 978-1-4244-0142-0
- HO-IN JEON ET AL: "Efficient, Real-Time Short Address Allocations for USN Devices Using LAA (Last Address Assigned) Algorithm", TOWARD NETWORK INNOVATION BEYOND EVOLUTION : THE 9TH INTERNATIONAL CONFERENCE ON ADVANCED COMMUNICATION TECHNOLOGY ; ICACT 2007 ; PHOENIX PARK, KOREA, FEB. 12 - 14, 2007 ; PROCEEDINGS, IEEE TECHNICAL ACTIVITIES, PISCATAWAY, NJ, USA, 1 February 2007 (2007-02-01), pages 689-693, XP031084882, ISBN: 978-89-5519-131-8
- MAHMUD S ET AL: "Meshed high data rate personal area networks", IEEE COMMUNICATIONS SURVEYS AND TUTORIALS, INSTITUTE OF ELECTRICAL AND ELECTRONICS ENGINEERS, US, vol. 10, no. 1, 1 January 2008 (2008-01-01), pages 58-69, XP011226093, ISSN: 1553-877X, DOI: 10.1109/COMST.2008.4483670

## Description

### 1. Domaine de l'invention

Le domaine de l'invention est celui des télécommunications.

Plus précisément, l'invention concerne la construction et la gestion de réseaux basés sur le protocole IP (en anglais « Internet Protocol », en français « Protocole Internet »), et notamment la construction et la gestion de réseaux à base de politiques d'opérateur réseau.

En particulier, l'invention concerne les réseaux mettant en œuvre une architecture de type PDP/PEP (en anglais « Policy Decision Point » / « Policy Enforcement Point », en français « point de décision de la politique » / « point d'application (ou exécution) de la politique »).

### 2. Art antérieur

Le groupe de travail RAP (en anglais « Resource Allocation Protocol ») de l'IETF (en anglais « Internet Engineering Task Force ») a défini, dans le document RFC2753, une architecture fonctionnelle spécifique à la gestion de réseaux à base de politiques.

Cette architecture définit deux éléments fonctionnels, nommés PDP et PEP.

Le sigle PDP désigne un dispositif responsable de la prise de décision et la notification de ces décisions à des PEP. Plus précisément, le PDP est responsable de la génération des décisions reflétant différentes politiques (par exemple politiques d'acheminement et d'ingénierie de trafic, politiques de sécurité, politiques de qualité de service, etc.) qui doivent être exécutées par un ou plusieurs PEP. Par exemple, un PDP peut être embarqué dans un serveur, une passerelle, un routeur, etc.

Le sigle PEP désigne un dispositif responsable de la réception des décisions envoyées par un PDP et de leur application locale. Plus précisément, un PEP peut être défini comme un dispositif apte à mettre en œuvre un ensemble de fonctions, encore appelées règles, contrôlables et/ou contrôlées par un ou plusieurs PDP. Ainsi, un PEP est un dispositif responsable du traitement des commandes générées par un PDP (et reflétant les prises de décision du PDP relatives à la mise en place d'une ou plusieurs politiques). Ce traitement intègre le processus de configuration des fonctions concernées dans un équipement qui embarque le PEP (par exemple configuration d'une fonction de conditionnement de trafic IP dans le cadre de la mise en place d'une politique de qualité de service), ainsi que le compte-rendu de l'application des décisions prises par le PDP. Ce compte-rendu est transmis par le PEP au PDP, et indique le succès ou l'échec des opérations de configuration reflétant la mise en application d'une décision. Par exemple, un PEP peut être embarqué dans un nœud IP du réseau, dans un serveur connecté à un équipement du réseau, dans une passerelle, etc.

Différents protocoles peuvent être utilisés pour assurer une communication entre un PEP et un PDP, comme le protocole COPS tel que défini dans le document RFC2748, ou le protocole COPS-PR tel que défini dans le document RFC3084.

Une telle architecture spécifique à la gestion de réseaux à base de politiques permet par exemple d'allouer dynamiquement des ressources réseau à un réseau domestique ou tout autre réseau. Les services fournis dans le réseau, tels l'adressage des éléments constituant le réseau, ou les services réseau requis par des applications, tels la qualité de service, peuvent ainsi être configurés dynamiquement.

Pour ce faire, les PEP récupèrent et mettent en œuvre les fonctions ou configurations qui leur sont fournies par un ou plusieurs PDP. Ainsi, sur requête d'un PEP ou de sa propre initiative, un PDP envoie des éléments de configuration à un PEP.

Cette architecture présente néanmoins des inconvénients. En effet, au démarrage, les échanges d'informations entre le PEP et le PDP sont toujours initiés par le PEP. Le PEP doit contacter le PDP et s'identifier auprès de ce dernier. Pour cela, le PEP doit préalablement disposer de l'adresse de l'équipement embarquant le PDP et de l'identifiant du PDP à contacter, par exemple, le nom de domaine (en anglais, FQDN « Fully Qualified Domain Name ») du PDP.

Or lorsqu'un nouvel équipement embarquant un module PEP se connecte à un réseau existant, il ne connaît pas à l'avance l'identité du ou des PDP qu'il doit contacter.

De la même façon, le PDP ne connaît pas les caractéristiques du nouveau PEP ; en particulier, le PDP ne connait pas la liste des adresses IP du PEP, la configuration, la liste des interfaces réseau de chaque PEP, la liste des fonctions qu'embarque chaque PEP, les liens d'interconnexion avec d'autres PEP, et ainsi de suite.

La gestion/construction d'un tel réseau ne s'effectue donc pas automatiquement, et il n'est pas simple pour un utilisateur de connecter un nouvel équipement à un tel réseau.

Il existe déjà, pour d'autres types de réseaux, des techniques permettant de connecter simplement un nouvel équipement à un réseau existant.

Par exemple, l'UPnP (en anglais « Universal Plug and Play ») est un protocole de découverte et de contrôle de services permettant à des périphériques de découvrir les services disponibles (par exemple, imprimante), et de simplifier la mise en œuvre de réseaux à la maison (partages de fichiers, communications, divertissements) ou dans les entreprises.

Un tel protocole s'appuie également sur le mode de transmission multicast IP.

Toutefois, même si un tel protocole était utilisé dans un réseau à base de politiques, il ne permettrait pas la découverte automatique de PEP et/ou de PDP. En effet, si aucune adresse IP autre qu'une adresse de lien local n'est allouée à un nœud IP (i.e. PEP), ce nœud ne pourra pas utiliser de service réseau (par exemple un service DNS ou un service d'impression) si le point de contrôle (i.e. PDP) n'est pas localisé sur le même lien que le nœud IP.

De plus, un tel protocole n'est pas approprié pour un déploiement à grande échelle (par exemple le déploiement dans un réseau composé de centaines ou de milliers de nœuds IP tels les réseaux des opérateurs Internet).

Il existe donc un besoin pour une nouvelle technique de construction/gestion des réseaux à base de politique permettant à un PDP de découvrir automatiquement les PEP disponibles et la topologie du réseau auquel est connecté ce PDP, et/ou permettant l'allocation automatique d'adresses IP routables, et/ou permettant à un PEP de découvrir automatiquement son ou ses PDP. Le document "Efficient Address Assignment Mesh Nodes In Real Time ; 15-05-0700-00-0005-efficient-address-assignment-mesh-nodes-in-real-time", IEEE DRAFT; 15-05-0700-00-0005-EFFICIENT-ADDRESS-ASSIGNMENT-MESH-NODES-IN-REAL-TIME, IEEE-SA MENTOR, PISCATAWAY, NJ USA, vol. 802.155, 17 novembre 2005, pages 1-30, XP017669767, divulgue un procédé d'allocation d'adresses par un nœud central.

### 3. Exposé de l'invention

L'invention propose une solution nouvelle qui ne présente pas l'ensemble de ces inconvénients de l'art antérieur. L'invention est définie dans les revendications indépendantes. Des caractéristiques supplémentaires de l'invention sont fournies dans les revendications dépendantes. Dans les parties suivantes de la description et des dessins faisant référence à des modes de réalisation qui ne sont pas couverts par les revendications, ne sont pas présentés en tant que modes de réalisation de l'invention, mais en tant qu'exemples utiles pour comprendre l'invention.

L'invention propose ainsi une nouvelle solution pour la configuration automatique de réseau, ne nécessitant pas la connaissance préalable de l'adresse du nœud du réseau embarquant des fonctionnalités de prise de décision (nœud PDP) pour pouvoir fonctionner. Elle permet ainsi à un nœud PEP de découvrir automatiquement son ou ses PDP et éventuellement les autres nœuds PEP du réseau.

De plus, la solution proposée offre une gestion automatique et distribuée d'un plan d'adressage IP, en « découvrant » de proche en proche de nouveaux nœuds (i.e. en leur allouant au moins une adresse IP) et en déléguant à ces nouveaux nœuds découverts une liste d'adresses IP à partir de laquelle ils pourront sélectionner au moins une adresse IP à allouer à leurs voisins. La solution proposée permet donc d'allouer des adresses IP autres que des adresses de type lien local, aux nœuds du réseau. On note que la technique proposée peut également être utilisée pour configurer des adresses de portée limitée.

La solution proposée permet également de changer les adresses IP allouées aux nœuds sans avoir besoin de se connecter à chaque équipement pour le configurer explicitement. Elle permet donc de simplifier les opérations de renumérotation IP des équipements réseau et de réduire les coûts liés à la maintenance d'un réseau.

La solution proposée peut donc être mise en œuvre pour configurer un nouveau réseau ou reconfigurer un réseau existant.

On note que les adresses IP peuvent être de différentes familles d'adresses (par exemple, IPv4, IPv6 ou toute autre version). Notamment, la technique proposée permet de découvrir des adresses IPv4, IPv6 ou les deux à la fois. De ce fait, on utilise par la suite la simple dénomination « adresse IP ».

En particulier, le procédé met en œuvre une étape de transmission à au moins un nœud directement connecté audit nœud PEP, directement ou non directement connecté au nœud PDP, dit nœud voisin, d'un message de demande de configuration demandant si le nœud voisin est le nœud PDP (i.e. demande de découverte de PDP). Un tel message comprend également les informations de configuration courantes du nœud PEP, comme par exemple une liste des identifiants des ports réseaux disponibles sur le nœud PEP, les adresses MAC des interfaces, l'état d'activation de chaque interface réseau, l'adresse MAC du voisin sur un lien, l'adresse IP d'un voisin sur un lien donné, etc. D'autres objets (facultatifs) tels que l'ensemble des fonctions supportées par le nœud PEP, le temps écoulé depuis le dernier redémarrage, l'adresse de l'interface virtuelle si une telle adresse a été allouée avant le redémarrage (STALE_LOOPBACK_ADDRESS), etc., peuvent également être transmis au nœud PDP. Ce message peut être de différents types. Par exemple, un tel message peut être :
- un message multicast, noté MCAST_ARE_YOU_PDP, adressé à tous les nœuds voisins du nœud PEP, dont l'adresse source est l'adresse IP du nœud PEP et l'adresse destination est une adresse multicast connue WKA (en anglais « Well-Known Address »), ou
- un message unicast, noté UNICAST_ARE_YOU_PDP, adressé à un nœud voisin, dont l'adresse source est l'adresse IP du nœud PEP et l'adresse destination est une adresse unicast.

Selon une autre caractéristique particulière, le procédé de configuration met en œuvre une étape d'allocation d'au moins une adresse de type lien local au nœud PEP préalablement à l'étape d'identification.

On rappelle qu'une adresse de type lien local (« link-local » en anglais) est une adresse IP avec une portée limitée à un lien. En d'autres termes, un paquet IP envoyé à une adresse de type lien local ne peut pas être transféré au-delà du nœud connecté au même lien. Les adresses IPv4 de type lien local sont définies dans le document RFC 3927 (plus précisément 169.254/16), et les adresses IPv6 de type lien local sont définies dans le document RFC 4291 (plus précisément fe80::/64).

Selon un premier exemple de réalisation, si le nœud PEP est directement connecté au nœud PDP (i.e. si le nœud PEP est un nœud non-découvert directement-connecté), l'étape d'identification met en œuvre la réception par le nœud PEP d'un message émis par le nœud PDP comprenant ladite au moins une adresse IP à allouer au nœud PEP, et la liste d'adresses déléguées.

Selon ce premier exemple, le nœud PEP reçoit un message directement émis par le nœud PDP, suite à sa demande de découverte de PDP. Ce message est adressé à une adresse unicast ou une adresse de type lien local du nœud PEP, et noté respectivement UNICAST_IM_PDP ou LL_IM_PDP. L'adresse source du message est une adresse unicast associée au PDP.

En particulier, le procédé comprend une étape de sélection d'au moins une adresse IP disponible parmi la liste d'adresses déléguées et une étape de transmission à au moins un nœud non-découvert directement connecté au nœud PEP d'un message comprenant une adresse dudit nœud PDP et ladite au moins une adresse IP sélectionnée, destinée à être allouée audit au moins un nœud non-découvert.

En effet, le procédé selon au moins un mode de réalisation de l'invention permet de « déléguer » au nœud PEP une liste d'adresses IP disponibles, dite liste d'adresses déléguées. Parmi cette liste, le nœud PEP peut choisir une ou plusieurs adresses à allouer à l'un de ses voisins. La liste d'adresses déléguées est alors mise à jour.

Le nœud PEP peut ainsi « découvrir » un nœud voisin, en lui allouant au moins une adresse IP et en lui communiquant une adresse d'un nœud PDP.

Selon un deuxième exemple de réalisation, si le nœud PEP n'est pas directement connecté au nœud PDP, et si le nœud PEP est directement connecté à au moins un nœud découvert (i.e. si le nœud PEP est un nœud non-découvert indirectement-connecté), l'étape d'identification met en œuvre la réception par le nœud PEP d'au moins un message émis par ledit au moins un nœud découvert comprenant une adresse dudit nœud PDP, ladite au moins une adresse IP à allouer audit nœud PEP, sélectionnée par ledit au moins un nœud découvert parmi la liste d'adresses déléguées, préalablement reçue par ledit au moins un nœud découvert.

Selon ce deuxième exemple, le nœud PEP reçoit un message d'un nœud découvert (i.e. auquel on a alloué au moins une adresse IP) permettant d'identifier le nœud PDP et d'allouer au moins une adresse IP au nœud PEP. Les adresses source et destination de ce message, noté LL_PDP_IS, sont par exemple de type lien local.

Selon un exemple, le nœud PEP sélectionne l'adresse la plus grande lorsqu'il reçoit plusieurs adresses IP candidates.

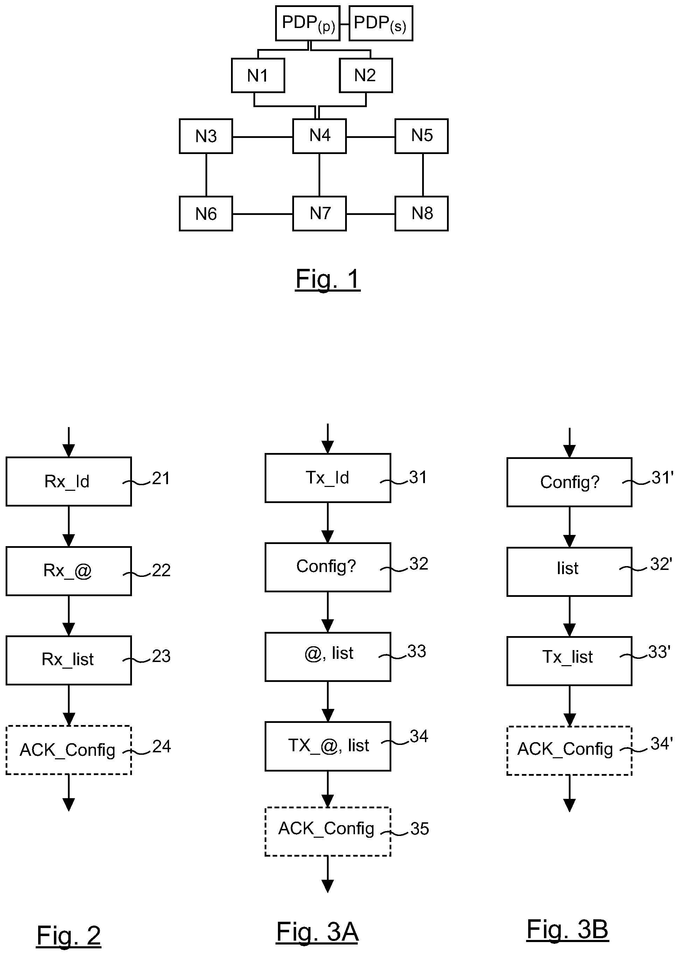

En effet, il est possible qu'un nœud PEP reçoive de la part de plusieurs nœuds voisins respectifs plusieurs adresses IP respectives de la même famille (c'est-à-dire, IPv4, ou IPv6, ou autre) destinées à lui être allouées. Dans ce cas, le nœud PEP sélectionne la plus grande adresse reçue. Par exemple, une adresse IPv4 a.b.c.d est dite supérieure à a1.b1.c1.d1 si abcd> a1b1c1c1. Une adresse IPv6 a:b:c:d:e:f:g:k est dite supérieure à a1:b1:c1:d1:e1:f1:g1:k1 si abcdefgek > a1b1c1d1e1f1g1k1.

En variante, la procédure peut être aussi configurée de manière à ce qu'elle utilise à la place l'adresse la plus petite, ou tout autre logique de sélection.

Selon un exemple, l'étape d'allocation comprend l'allocation d'au moins une adresse IP à au moins une interface virtuelle du nœud PEP.

On rappelle qu'une interface virtuelle ou logique, encore appelée interface « loopback » en anglais, est montée par un équipement du réseau (par exemple un routeur) pour éviter la dépendance avec ses interfaces physiques. Cette interface virtuelle est particulièrement utile pour assurer l'accessibilité à l'équipement même en cas de panne d'une des interfaces physiques.

De ce fait, l'adresse affectée à cette interface virtuelle peut être utilisée comme un identifiant stable pour désigner un nœud IP. Plusieurs adresses virtuelles (de la même famille d'adresses IP ou de familles distinctes) peuvent être configurées.

Selon un mode de réalisation particulier, le message reçu par le nœud PEP lors de l'étape d'identification comprend un indicateur signalant si l'émetteur du message est le nœud PDP.

Par exemple, un tel indicateur peut être un drapeau (« flag » en anglais) noté ls_PDP, positionné à la valeur « 1 » pour indiquer aux destinataires que le nœud ayant émis ce message agit comme PDP. Il peut notamment être inséré dans un message multicast transmis par le nœud PDP à ses voisins, noté MCAST_IM_PDP, dont l'adresse source message est l'adresse IP unicast du PDP et l'adresse IP de destination est une adresse multicast dédiée (WKA), ou dans le message unicast UNICAST_IM_PDP défini précédemment.

En particulier, si le réseau comprend plusieurs nœuds PDP, l'étape d'identification permet d'identifier le nœud PDP principal (encore appelé nœud primaire). Le nœud PDP principal communique ensuite avec les nœuds PDP secondaires pour leur transmettre les informations de configuration les concernant.

L'invention facilite ainsi la communication inter-PDP.

Selon un exemple, le procédé de configuration comprend une étape de réception par le nœud PEP d'un message comprenant un condensé représentatif de l'identité d'un nouveau nœud PDP, distinct du nœud principal, et de vérification de l'identité du nouveau nœud PDP au moyen d'une clé partagée.

Ainsi, la technique proposée permet de changer l'adresse IP qui permet d'identifier et d'atteindre un nœud PDP d'une manière transparente. Par exemple, la technique proposée permet à un autre nœud PDP de prendre le relais en cas de défaillance du nœud PDP principal. Les nœuds PEP peuvent ainsi découvrir la nouvelle adresse IP du nœud PDP sans intervention d'un opérateur humain.

Selon un autre exemple, le message transmis par le nœud PDP permettant d'identifier le nœud PDP comprend une information de temporisation, et l'étape d'allocation est mise en œuvre à l'issue d'une période définie par ladite information de temporisation.

Une telle information de temporisation, encore appelée « timer » en anglais, ou notée RANDOM_TIMER_VALUE, est utilisée pour étaler les messages de notification en cas de changement de configuration. En particulier, la mise en œuvre d'une telle temporisation permet d'éviter le phénomène de synchronisation de messages de notification pouvant induire un problème de surcharge dans le nœud PDP en cas de changement de configuration.

Selon encore un autre exemple, le procédé de configuration met en œuvre une étape de transmission par le nœud PEP, au nœud PDP, d'un message comprenant des informations de configuration du nœud PEP mises à jour (décrivant par exemple ses interfaces : liste des ports physiques, liste des adresses MAC, adresses de type lien local des interfaces voisines, adresse d'une interface virtuelle d'un nœud voisin, capacité de chaque interface, fonctions supportées par le nœud, etc.). Un tel message, noté UNICAST_CONFIG_ACK est optionnel, et envoyé par le nœud PEP à son nœud PDP pour confirmer la réception de configuration émise par le PDP.

En particulier, le procédé de configuration comprend une étape de mise à jour d'au moins une table d'acheminement associée au nœud PEP comprenant des informations de configuration des nœuds voisins du nœud PEP.

Par exemple, le nœud PEP alimente sa table d'acheminement (en anglais « FIB » ou « Forwarding Information Base ») avec des informations concernant ses nœuds adjacents, comme les adresses de lien local et les adresses MAC de chaque voisin.

Selon une caractéristique particulière, le procédé de configuration comprend une étape de mise à jour d'une variable pointant vers le nœud PDP.

L'invention concerne également un procédé de gestion d'un réseau mis en œuvre au niveau d'un nœud du réseau embarquant des fonctionnalités de prise de décision, dit nœud PDP comme défini dans la revendication 8.

L'invention propose ainsi une nouvelle solution pour la découverte automatique de PEP et de la topologie d'un réseau contrôlé par un nœud PDP.

En particulier, il est possible de répertorier la topologie réseau ainsi que la configuration mise à jour de l'ensemble des nœuds IP constituant un réseau opérationnel sans avoir besoin d'activer plusieurs protocoles pour chacune des tâches (par exemple gestion du plan d'adressage, configuration IP, inventaire des fonctions supportées par les équipements IP, découverte des voisins, etc.). Cette connaissance globale et systémique du réseau contribue particulièrement à la simplification des opérations de diagnostic en cas de panne, ce qui permet a priori de réduire les coûts d'exploitation du réseau.

De plus, les fonctions avancées telles que le routage ou l'équilibrage de trafic sont autant de fonctions caractéristiques de la prise de décision / mise en place d'une politique de routage de trafic définie et maintenue par un nœud PDP. De ce fait, les nœuds PEP connectés au nœud PDP n'ont besoin que de ressources limitées pour appliquer les décisions / politiques envoyées par le ou les nœuds PDP. La solution proposée encourage donc le déploiement d'équipements IP à ressources limitées, et permet donc de réduire les coûts des équipements IP tout en garantissant un service de transfert conforme à la politique de routage mise en place par exemple.

Selon un exemple, le message permettant d'identifier le nœud PDP comprend une information de temporisation, par exemple de type RANDOM_TIMER_VALUE, telle que définie précédemment.

Selon un autre aspect particulier de l'invention, le message permettant d'identifier le nœud PDP comprend un indicateur signalant que l'émetteur du message est le nœud PDP.

Un tel indicateur est par exemple le drapeau ls_PDP tel que défini précédemment.

Selon une caractéristique exemplaire, l'étape de transmission comprend la transmission d'un message multicast à destination des nœuds directement connectés au nœud PDP à intervalles de temps réguliers, tant qu'au moins une adresse IP n'a pas été allouée à chacun des nœuds directement connectés au nœud PDP.

L'adresse source d'un tel message multicast, noté MCAST_IM_PDP, est par exemple l'adresse IP unicast du PDP, et l'adresse IP de destination est une adresse multicast dédiée (WKA).

Selon encore une caractéristique exemplaire, le réseau comprend plusieurs nœuds PDP, dont un nœud PDP principal et au moins un nœud PDP secondaire, et les étapes de transmission, sélection et réception sont mises en œuvre par le nœud PDP principal. Le nœud PDP principal transmet ensuite audit au moins un nœud PDP secondaire des informations de configuration le concernant.

Selon une autre caractéristique exemplaire, le procédé de gestion comprend une étape de mise à jour d'au moins une table de routage suite à la réception des informations de configuration.

En particulier, la technique permet de construire dynamiquement des tables de routage (ou RIB pour « Routing Information Base »), sans activation de protocole de routage dédié.

Selon encore une autre caractéristique, le procédé de gestion comprend une étape de détermination de la topologie du réseau à partir des informations de configuration reçues.

Le nœud PDP peut ainsi découvrir automatiquement la topologie du réseau (nœuds, fonctions supportées par ces nœuds, la liste des ports réseau, la description de la configuration des interfaces des différents nœuds, l'état d'activation des interfaces, les liens, les voisins IP, etc.) en corrélant l'ensemble des informations remontées par les nœuds PEPs.

L'invention concerne également un équipement d'un réseau embarquant des fonctionnalités d'exécution d'une décision, dit nœud PEP, selon la revendication 11.

Un tel équipement est notamment adapté à mettre en œuvre le procédé de configuration décrit précédemment, en tant que nœud PEP.

Cet équipement pourra bien sûr comporter les différentes caractéristiques relatives au procédé de configuration selon l'invention, qui peuvent être combinées ou prises isolément. Ainsi, les caractéristiques et avantages de cet équipement sont les mêmes que ceux du procédé de configuration, et ne sont pas détaillés plus amplement.

L'invention concerne encore un équipement d'un réseau embarquant des fonctionnalités de prise de décision, dit nœud PDP, selon la revendication 12.

Cet équipement pourra bien sûr comporter les différentes caractéristiques relatives au procédé de gestion selon l'invention, qui peuvent être combinées ou prises isolément. Ainsi, les caractéristiques et avantages de cet équipement sont les mêmes que ceux du procédé de gestion, et ne sont pas détaillés plus amplement.

Un exemple concerne encore un réseau comprenant au moins un nœud PDP et au moins un nœud PEP tels que décrits précédemment.

L'invention concerne par ailleurs un ou plusieurs programmes d'ordinateur, comportant des instructions pour l'exécution des étapes du procédé de configuration tel que décrit précédemment, et/ou du procédé de gestion tel que décrit précédemment, lorsque le ou les programmes sont exécutés par un ordinateur.

L'invention concerne donc également un moyen de stockage de données inamovible, ou partiellement ou totalement amovible, comportant des instructions de code de programme informatique pour l'exécution des étapes du procédé de configuration tel que décrit précédemment, et/ou du procédé de gestion tel que décrit précédemment.

Les procédés selon l'invention peuvent donc être mis en œuvre de diverses manières, notamment sous forme câblée ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente une architecture de référence pour un réseau IP selon l'invention ;
- les figures 2, 3A et 3B illustrent respectivement les principales étapes mises en œuvre par un procédé de configuration et par un procédé de gestion selon l'invention ;
- les figures 4A et 4B présentent un exemple de mise en œuvre de l'invention ;
- les figures 5 et 6 illustrent respectivement la structure simplifiée d'un équipement mettant en œuvre des fonctionnalités d'exécution d'une décision et la structure simplifiée d'un équipement mettant en œuvre des fonctionnalités de prise de décision selon un mode de réalisation particulier de l'invention.

### 5. Description d'un mode de réalisation de l'invention

### 5.1 Principe général

L'invention concerne la construction et la gestion de réseaux à base de politiques d'opérateur réseau.

Un tel réseau IP, tel qu'illustré en figure 1, est constitué de plusieurs nœuds IP, référencés N1, N2, ... Nn, avec n= 8 par exemple. Un ou plusieurs PDP peuvent être déployés pour configurer et appliquer des politiques de routage, de filtrage, de marquage de trafic, de gestion de LSP MPLS (en anglais « Label Switching Path » et « MultiProtocol Label Switching », en français « chemin de commutation par étiquettes » et « multiprotocole de commutation d'étiquettes »), etc. Le PDP a pour objectif de découvrir la topologie du réseau sous-jacent tout en assurant une cohérence de configuration des nœuds IP participant à la fourniture du service de connectivité IP. Les nœuds IP ont pour objectif de découvrir leur(s) PDP et de récupérer une adresse IP leur permettant d'établir des communications IP non restreintes à un lien local. Le(s) PDP peuvent supporter plusieurs algorithmes de décision tels que : calcul de chemin le plus court, calcul de chemin avec contraintes, prévention de la congestion de trafic, optimisation de la consommation électrique en réveillant à la demande un nœud de secours (ou une carte de service, une interface, etc.).

On note que pour améliorer la disponibilité des PDP, un groupe de PDP redondants peut être configuré. Par exemple, une adresse anycast est utilisée pour joindre le groupe de PDP redondants. Pour chaque groupe de PDP redondants, un PDP est élu pour agir comme PDP principal (noté PDP(p) et les autres PDP comme PDP secondaires (notés PDP(s)). En cas de panne du PDP principal, un des PDP secondaires peut alors prendre le relais.

Chaque nœud Ni de l'architecture de référence illustrée en figure 1 embarque des fonctionnalités d'exécution d'une décision telles que décrites ci-après. Un tel nœud Ni est encore appelé nœud PEP dans la suite de la description. Les nœuds PDP de l'architecture de référence embarquent des fonctionnalités de prise de décision.

On présente en particulier, en relation avec la figure 2, les principales étapes mises en œuvre au niveau d'un nœud courant N(i) du réseau de la figure 1.

Au cours d'une première étape 21, le nœud courant N(i) reçoit un message lui permettant d'identifier un nœud PDP du réseau embarquant des fonctionnalités de prise de décision. Un tel message est transmis par un nœud directement connecté au nœud courant, qui peut être le nœud PDP ou un nœud découvert du réseau, i.e. un nœud du réseau possédant une adresse IP et connaissant l'adresse IP du nœud PDP.

Au cours d'une deuxième étape 22, au moins une adresse IP est allouée au nœud courant N(i). Cette adresse IP est distincte d'une adresse de lien local, et peut être transmise par le nœud PDP ou par le nœud découvert. Cette (ces) adresse(s) IP est(sont) choisie(s) parmi un ensemble d'adresses connues du nœud PDP. En particulier, le PDP peut allouer à la fois une adresse IPv4 et une adresse IPv6 au nœud découvert.

Au cours d'une troisième étape 23, le nœud courant N(i) reçoit une liste d'au moins une adresse IP disponible destinée à être allouée à au moins un autre nœud directement connecté au nœud courant N(i) dans le réseau et ne possédant pas d'adresse IP, dit nœud non-découvert. Cette liste, encore appelée liste d'adresses déléguées, est transmise au nœud courant N(i) par le nœud PDP. Elle est obtenue à partir de l'ensemble d'adresses connues du nœud PDP et régulièrement mise à jour.

Optionnellement enfin, aux fins de confirmation, le nœud courant N(i) transmet au nœud PDP un message comprenant des informations de configuration mises à jour du nœud courant, permettant de confirmer la réception de configuration émise par le PDP, au cours d'une quatrième étape 24.

Un tel nœud courant est alors considéré comme « découvert » et peut être utilisé par l'un de ses voisins pour identifier le nœud PDP.

Les principales étapes mises en œuvre au niveau d'un nœud PDP embarquant des fonctionnalités de prise de décision sont quant à elles illustrées en figures 3A et 3B. On distinguera ici, au sein du réseau contrôlé par ce PDP, les nœuds directement connectés au nœud PDP, dits nœuds directement-connectés, des nœuds non-directement connectés au nœud PDP, dits nœuds indirectement-connectés.

Considérons d'abord le cas d'un nœud Ni directement connecté au nœud PDP et ne possédant pas d'adresse IP, dit nœud non-découvert directement-connecté, illustré en figure 3A.

Au cours d'une première étape 31, le nœud PDP(p) transmet, à au moins un tel nœud Ni, un message permettant à ce nœud Ni d'identifier le nœud PDP.

Au cours d'une deuxième étape 32, le nœud PDP(p) reçoit un message de demande de configuration de la part dudit nœud Ni. Ce message comprend aussi, par exemple, une liste des identifiants des ports réseaux disponibles sur le nœud PEP, les adresses MAC des interfaces, l'état d'activation de chaque interface réseau, l'adresse MAC du voisin sur un lien, l'adresse IP d'un voisin sur un lien donné, etc. D'autres objets (facultatifs) tels que l'ensemble des fonctions supportées par le nœud PEP, le temps écoulé depuis le dernier redémarrage, l'adresse de l'interface virtuelle si une telle adresse a été allouée avant le redémarrage (STALE_LOOPBACK_ADDRESS), etc., peuvent également être transmis au nœud PDP.

Au cours d'une troisième étape 33, le nœud PDP(p) sélectionne, d'une part, au moins une adresse IP à allouer au nœud Ni, parmi un ensemble d'adresses connues du nœud PDP(p), et d'autre part une liste d'au moins une adresse IP disponible destinée à être allouée à au moins un autre nœud directement connecté audit nœud Ni, dite liste d'adresses déléguées, la liste d'adresses déléguées étant obtenue à partir dudit ensemble d'adresses, et régulièrement mise à jour.

Au cours d'une quatrième étape 34, le nœud PDP(p) transmet au nœud Ni la ou les adresses IP sélectionnées, et ladite liste d'adresses déléguées sélectionnée.

Le nœud Ni préalablement « non-découvert » peut alors être considéré comme « découvert », et peut être utilisé par l'un de ses voisins pour identifier le nœud PDP.

Optionnellement, aux fins de confirmation, le nœud PDP(p) reçoit un message comprenant des informations de configuration mises à jour du nœud Ni, au cours d'une cinquième étape 35, permettant de confirmer la réception de configuration émise par le PDP.

Considérons ensuite le cas d'un nœud Ni' non directement connecté au nœud PDP, dit nœud non-découvert indirectement-connecté, illustré en figure 3B.

Au cours d'une première étape 31', le nœud PDP(p) reçoit un message de demande de configuration de la part dudit nœud Ni'. Ce message comprend aussi, par exemple, une liste des identifiants des ports réseaux disponibles sur le nœud PEP, les adresses MAC des interfaces, l'état d'activation de chaque interface réseau, l'adresse MAC du voisin sur un lien, l'adresse IP d'un voisin sur un lien donné, etc. D'autres objets (facultatifs) tels que l'ensemble des fonctions supportées par le nœud PEP, le temps écoulé depuis le dernier redémarrage, l'adresse de l'interface virtuelle si une telle adresse a été allouée avant le redémarrage (STALE_LOOPBACK_ADDRESS), etc., peuvent également être transmis au nœud PDP.

Au cours d'une deuxième étape 32', le nœud PDP(p) sélectionne une liste d'au moins une adresse IP disponible destinée à être allouée à au moins un autre nœud directement connecté audit nœud Ni', dite liste d'adresses déléguées, la liste d'adresses déléguées étant obtenue à partir d'un ensemble d'adresses connues du nœud PDP, et régulièrement mise à jour.

Au cours d'une troisième étape 33', le nœud PDP(p) transmet au nœud Ni' ladite liste d'adresses déléguées sélectionnée.

Le nœud Ni' préalablement « non-découvert » peut alors être considéré comme « découvert », et peut être utilisé par l'un de ses voisins pour identifier le nœud PDP.

Optionnellement, aux fins de confirmation, le nœud PDP(p) reçoit un message comprenant des informations de configuration mises à jour du nœud Ni', au cours d'une quatrième étape 34', permettant de confirmer la réception de configuration émise par le PDP.

### 5.2 Description d'un mode de réalisation détaillé

On décrit ci-après un mode de réalisation particulier, selon lequel un PDP (ou un groupe de PDP redondants) est provisionné avec un ensemble d'adresses IP disponibles destinées à être allouées aux interfaces virtuelles (« loopback ») des nœuds IP du réseau contrôlé par le PDP ou le groupe de PDP. On rappelle que l'ensemble d'adresses peut contenir des adresses de type IPv4, des adresses de type IPv6, des adresses IPv4 et IPv6, ou tout autre adresse IP. Comme déjà indiqué, on utilise de ce fait la simple dénomination « adresse IP ».

### A) Procédure générale

Selon ce mode de réalisation, un nœud PDP (ou un groupe de nœud PDP) est désigné pour assurer la responsabilité de configurer un réseau IP. Un nœud embarquant la fonction PDP annonce périodiquement qu'il agit comme PDP (principal). Pour ce faire, il diffuse à fréquence régulière un message à tous ses voisins (c'est-à-dire aux nœuds directement connectés à ce nœud PDP). La technique proposée adopte une approche incrémentale, de transmission de proche en proche, pour la configuration des adresses des interfaces virtuelles. Le PDP délègue à chaque nœud PEP découvert une liste d'adresses IP à communiquer à leurs voisins immédiats n'ayant pas encore achevé la procédure de configuration et de découverte de PDP.

On note que la technique proposée permet aussi de rediriger certains nœuds vers d'autres PDP une fois la topologie découverte.

Chaque nœud PEP alloue automatiquement une adresse IP (IPv4 ou/et IPv6) de type lien local pour ses interfaces actives. L'adresse de type lien local peut être générée de manière aléatoire, en fonction de l'adresse MAC (en anglais « Media Access Control ») de l'interface physique ou en utilisant une autre méthode. La fonction de détection de duplication d'adresses de type lien local n'est pas obligatoirement activée dans chaque nœud PEP car cette fonction peut être implémentée par le PDP lui-même. En effet, un PDP peut demander à un nœud de re-générer une autre adresse de type lien local en cas d'ambiguïté.

Tous les nœuds PEP utilisent une adresse multicast connue (WKA). Cette adresse multicast est utilisée par un nœud PEP pour communiquer avec ses voisins lorsqu'aucune adresse n'est affectée à une interface virtuelle du nœud PEP. Chaque nœud PEP utilise son adresse de type lien local pour envoyer des messages IP lorsqu'aucune adresse n'est allouée à son interface virtuelle.

Si un nœud PEP est un voisin immédiat du nœud PDP (i.e. est directement connecté au nœud PDP), il découvre l'identité (adresse IP) du PDP grâce aux annonces périodiques du PDP ou suite à la réponse explicite du PDP comme réponse à un message explicite de demande d'information descriptive de l'adresse IP du PDP.

Si le nœud PEP n'est pas un voisin immédiat du PDP, alors il récupère l'identité (adresse IP) du PDP auprès de l'un de ses voisins ayant achevé la procédure de découverte.

Une fois l'identité du PDP découverte par un nœud PEP, celui-ci se voit allouer au moins une adresse IP à son interface virtuelle. Le PDP fournit alors au nœud PEP une liste d'adresses déléguées à attribuer aux interfaces virtuelles des voisins de ce nœud PEP. Par exemple, une telle liste est appelée PEER_LOOPBACK_IP_ADDRESS_POOL. De préférence, chaque nœud PEP découvert envoie à son PDP ses informations de configuration décrivant ses interfaces (par exemple liste des ports physiques, liste des adresses MAC, adresses de type lien local des interfaces voisines, adresse d'une interface virtuelle d'un nœud voisin, capacité de chaque interface, fonctions supportées par le nœud, etc.). Le nœud PEP peut envoyer sa configuration au nœud PDP en utilisant l'interface virtuelle à laquelle une adresse IP a été allouée. De plus, chaque nœud PEP maintient une variable pointant vers son nœud PDP (adresse IP unicast).

### B) Définition des messages

On présente ci-après les principaux messages utilisés selon ce mode de réalisation particulier.

Le message MCAST_IM_PDP est envoyé périodiquement par le nœud PDP à ses voisins immédiats. Ce message est envoyé à une adresse multicast connue (WKA). L'adresse source du message est une adresse unicast du PDP. Ce message peut être utilisé par les nœuds voisins du PDP pour découvrir l'adresse IP du PDP.

Le message UNICAST_IM_PDP est envoyé par le nœud PDP à un nœud ayant envoyé une demande de découverte de nœud PDP (par exemple en utilisant le message UNICAST_ARE_YOU_PDP présenté ci-dessous). Ce message est envoyé à une adresse unicast ou une adresse de type lien local. L'adresse source du message est une adresse unicast associée au nœud PDP. Ce message peut contenir un drapeau (« flag ») pointant vers une interface indiquant à un nœud PEP de re-générer une adresse de type lien local ou d'utiliser l'adresse de type lien local indiquée dans le message, qui utilise pour ce faire les paramètres INTERFACE_INDEX, LINK_LOCAL_RESET, et ALTERNATE_LL, où INTERFACE_INDEX est un index permettant d'identifier chaque interface associée à un nœud, LINK_LOCAL_RESET est un drapeau dont la valeur « 1 » indique au nœud de re-générer une adresse de type lien local, et ALTERNATE_LL est un paramètre optionnel qui peut contenir une adresse de type lien local générée par le PDP. Si le paramètre ALTERNATE_LL est renseigné dans le message UNICAST_IM_PDP, le PEP alloue l'adresse renseignée dans ALTERNATE_LL à l'interface ayant l'index INTERFACE_INDEX. Le paramètre ALTERNATE_LL permet d'éviter un conflit d'adresses de type lien local.

Ce message peut également être envoyé vers un nœud PEP du réseau sans que celui-ci sollicite le nœud PDP. L'envoi d'un message UNICAST_IM_PDP non-sollicité peut être motivé par la détection de duplication d'adresses de type lien local, changement d'adresse IP du nœud PDP, installation d'une nouvelle politique, mise à jour de la liste PEER_LOOPBACK_IP_ADDRESS_POOL, etc.

Le message UNICAST_ARE_YOU_PDP est envoyé par un nœud PEP pour demander au destinataire du message la confirmation qu'il agit comme un PDP, et, si c'est le cas, pour demander à ce nœud PDP de configurer le nœud PEP émetteur du message (ce type de message a été désigné ci-dessus comme « message de demande de configuration »). L'adresse source de ce message est une adresse unicast globale ; l'adresse de destination est l'adresse unicast du nœud PDP candidat.

Le message MCAST_ARE_YOU_PDP est envoyé par un nœud PEP à une adresse multicast WKA pour découvrir l'identité d'un PDP (ce type de message a, lui aussi, été désigné ci-dessus comme « message de demande de configuration »). L'adresse source de ce message est une adresse de type lien local ; l'adresse de destination est l'adresse multicast WKA.

Le message LL_PDP_IS est envoyé par un nœud PEP en réponse à une demande MCAST_ARE_YOU_PDP envoyée par un nœud voisin. Les adresses source et destination de ce message sont des adresses de type lien local. Ce message est également utilisé par le nœud PEP pour allouer une adresse IP à l'interface virtuelle d'un nœud voisin en cours de découverte de PDP.

Le message UNICAST_CONFIG_ACK est envoyé par un nœud PEP à son PDP pour confirmer la réception de configuration émise par le PDP. Ce message est optionnel. L'adresse source de ce message est une adresse unicast; l'adresse de destination est l'adresse unicast du PDP. Ce message doit contenir la configuration du nœud PEP prenant en compte l'exécution des instructions reçues du PDP.

### C) Procédure détaillée

Le nœud PDP annonce à fréquence régulière (par exemple toutes les 30 secondes), qu'il agit en tant que PDP. Pour ce faire, le nœud PDP utilise le message MCAST_IM_PDP défini ci-dessus. Ce message contient un indicateur appelé ls_PDP qui doit être positionné à « 1 ». Ce drapeau est utilisé pour indiquer aux destinataires que le nœud ayant émis ce message agit comme PDP.

Pour des besoins d'optimisation, le nœud PDP doit cesser d'envoyer ce message MCAST_IM_PDP si tous les nœuds directement connectés au nœud PDP sont convenablement configurés (i.e sont découverts). Pour décider si un nœud PEP est convenablement configuré, le PDP peut par exemple contrôler si des adresses IP ont été allouées à toutes les interfaces virtuelles des nœuds directement connectés au nœud PDP. On peut noter que si le nœud PDP ne reçoit de message multicast de type MCAST_ARE_YOU_PDP sur aucune de ses interfaces, le PDP peut alors déduire que tous les nœuds qui lui sont directement connectés ont terminé avec succès leur procédure de découverte de PDP, de configuration d'adresse IP et d'annonce des fonctions supportées par le nœud PEP au nœud PDP (c'est-à-dire de transmission au nœud PDP des informations de configuration comprenant par exemple une liste des interfaces, un état des interfaces, des adresses MAC, l'adresse MAC d'un voisin, l'adresse IP d'un voisin, etc.).

En parallèle, chaque nœud (PEP et PDP) alloue automatiquement une (ou plusieurs) adresse(s) IP (IPv4 ou IPv6 ou les deux) de type lien local pour chacune de ses interfaces réseau actives. L'adresse de type lien local peut être générée de manière aléatoire, en fonction de l'adresse MAC de l'interface physique ou en utilisant une autre méthode.

A l'initialisation, en plus de la génération des adresses de type lien local, chaque nœud PEP envoie le message MCAST_ARE_YOU_PDP à tous ses voisins. Le message MCAST_ARE_YOU_PDP contient aussi une liste des identifiants des ports réseaux disponibles sur le nœud PEP (chaque interface est identifiée par l'index INTERFACE_INDEX), les adresses MAC des interfaces, l'état d'activation de chaque interface réseau, l'adresse MAC du voisin sur un lien, l'adresse IP d'un voisin sur un lien donné, etc. D'autres objets (facultatifs) tels que l'ensemble des fonctions supportées par le nœud PEP, le temps écoulé depuis le dernier redémarrage, l'adresse de l'interface virtuelle si une telle adresse a été allouée avant le redémarrage (STALE_LOOPBACK_ADDRESS), etc., peuvent également être transmis au nœud PDP.

Deux cas sont à envisager dans le contexte de la réception du message MCAST_ARE_YOU_PDP :
1. Soit le nœud voisin du nœud PEP courant ayant émis le message MCAST_ARE_YOU_PDP est un nœud PDP : alors le nœud PDP répond avec le message UNICAST_IM_PDP dont l'adresse source est une adresse unicast IP et l'adresse IP destination est l'adresse de type lien local du nœud courant. L'indicateur ls_PDP est positionné à « 1 » pour indiquer que ce nœud voisin est un nœud PDP. Le message UNICAST_IM_PDP émis par le nœud PDP comprend aussi au moins une adresse IP destinée à être configurée comme adresse de l'interface virtuelle du nœud courant (LOOPBACK_ADDRESS). En plus, le message UNICAST_IM_PDP émis par le nœud PDP comprend une liste d'adresses déléguées appelée : PEER_LOOPBACK_IP_ADDRESS_POOL. Cette liste est utilisée par le nœud courant pour allouer une adresse IP autre que l'adresse de type lien local à l'un de ses voisins en cours de découverte de PDP. La variable PEER_LOOPBACK_IP_ADDRESS_POOL contient une liste d'adresses IP qui ne sont pas nécessairement contiguës. Le message UNICAST_IM_PDP émis par le nœud PDP peut également comprendre une information de temporisation, notée RANDOM_TlMER_VALUE, utilisée pour étaler les messages de notification en cas de changement de configuration. A titre d'exemple, une valeur RANDOM_TIMER_VALUE est sélectionnée d'une manière aléatoire pour indiquer au nœud PEP le temps d'attente nécessaire après un événement induisant un changement de configuration (par exemple, une interface indisponible) avant d'envoyer le message de notification au nœud PDP.
2. Soit le nœud voisin du nœud PEP courant ayant émis le message MCAST_ARE_YOU_PDP n'agit pas comme un PDP, mais il connaît l'identité du nœud PDP. Le nœud voisin du nœud PEP courant répond alors avec le message LL_PDP_IS. L'indicateur ls_PDP, positionné à « 0 », indique que le nœud émettant le message LL_PDP_IS n'est pas un PDP. Le message LL_PDP_IS comprend l'adresse IP du nœud PDP. Par exemple, ce message comprend aussi une ou deux adresses IP non-« lien local » a.b.c.d (IPv4) ou a:b:c::d (IPv6) à allouer à l'interface virtuelle du nœud courant. Le nœud voisin choisit cette adresse (ces adresses) parmi la liste d'adresses déléguées par le PDP (définie par la variable PEER_LOOPBACK_IP_ADDRESS_POOL).
   a. A la réception du message LL_PDP_IS, le nœud courant envoie le message UNICAST_ARE_YOU_PDP à l'adresse du PDP identifiée dans le message LL_PDP_IS (reçu d'un de ses voisins). Ainsi, l'adresse destination du message UNICAST_ARE_YOU_PDP est l'adresse unicast du PDP et l'adresse source est l'adresse allouée par le nœud voisin. Le message UNICAST_ARE_YOU_PDP comprend aussi des informations de configuration du nœud courant, comme par exemple une liste des identifiants des ports réseaux disponibles sur le nœud courant, les adresses MAC des interfaces actives, l'adresse MAC du voisin sur un lien, l'adresse IP d'un voisin sur un lien donné, etc., et éventuellement d'autres objets facultatifs tels que les fonctions supportées par le nœud courant, le temps écoulé depuis le dernier redémarrage, l'adresse de l'interface virtuelle, etc. Le message UNICAST_ARE_YOU_PDP doit être envoyé sur l'interface pour laquelle une adresse virtuelle a été allouée.
      i. Si plusieurs adresses IP candidates sont communiquées à un nœud courant par des nœuds voisins, l'adresse IP la «plus grande» est sélectionnée.
      ii. Si une adresse IP de la même famille est déjà configurée à l'interface virtuelle, alors le nœud courant peut ne pas tenir compte des nouvelles adresses candidates reçues de la part d'autres voisins.
   b. Le nœud PDP répond alors avec le message UNICAST_IM_PDP dont l'adresse source est une adresse unicast IP et l'adresse IP destination est l'adresse unicast du nœud courant. L'indicateur ls_PDP est positionné à « 1 » pour indiquer que ce nœud est un nœud PDP. Le message UNICAST_IM_PDP contient aussi la liste d'adresses déléguées PEER_LOOPBACK_IP_ADDRESS_POOL. Cette liste sera utilisée par le nœud courant pour allouer une adresse IP qui n'est pas de type « lien local » à l'un de ses voisins en cours de découverte de PDP. Le message UNICAST_IM_PDP contient aussi l'information de temporisation RANDOM_TIMER_VALUE utilisée pour étaler les messages de notifications en cas de changement de configuration. Le nœud PDP peut alors décider de modifier la configuration IP de l'interface virtuelle du nœud courant : il suffit d'inclure une information spécifique, de type ADDRESS_LOOPBACK, dans un message UNICAST_IM_PDP pour demander au nœud courant de changer sa configuration. Le nœud courant doit alors mettre à jour sa configuration.

Optionnellement, le nœud PEP peut confirmer la réception des instructions de configuration en envoyant un message UNICAST_CONFIG_ACK au nœud PDP.

Le nœud courant alimente sa table d'acheminement (FIB) avec les informations concernant ses nœuds voisins (c'est-à-dire adresse de type lien local et adresse MAC de chaque voisin).

Une fois les nœuds PEP configurés (c'est-à-dire, selon ce mode de réalisation, une fois qu'une adresse IP a été allouée à l'interface virtuelle de chaque nœud PEP), le PDP peut alors appliquer des politiques dans tous les nœuds détectés. Par exemple, le PDP peut installer une nouvelle entrée dans la table de routage (RIB), ajouter une nouvelle table de routage (à noter que plusieurs tables RIB peuvent être maintenues), installer une nouvelle entrée dans une table d'acheminement FIB, ajouter une nouvelle FIB (plusieurs tables peuvent être maintenues), installer un LSP MPLS, installer une nouvelle politique de marquage de trafic, installer une politique de QoS (Qualité de Service), etc.

A l'issue de cette procédure, le PDP possède une connaissance complète de la topologie du réseau. En particulier, le PDP utilise l'adresse de type lien local allouée localement à l'interface de raccordement sur un lien et celle allouée à l'autre extrémité de ce lien par le voisin pour détecter les liens entre les nœuds IP. La découverte de l'adresse MAC peut se faire en utilisant les machineries protocolaires classiques telles que ARP (« Address Resolution Protocol ») ou ICMPv6.

En cas de changement de la configuration d'un nœud PEP (par exemple, une interface indisponible, panne, etc.), le nœud PEP envoie sa configuration mise à jour au nœud PDP. Pour éviter les problèmes de surcharge liés aux pannes passagères, un changement est envoyé seulement si la panne dure plus d'un nombre prédéterminé de secondes; ce seuil peut être préconfiguré sur chaque nœud PEP. Si une panne d'une des interfaces est détectée, le nœud PEP maintient sa configuration dans une phase notée STALE ; une fois la connexion rétablie, une mise à jour est envoyée au nœud PDP.

Un nœud PDP est désigné pour assurer la responsabilité de configurer un ensemble de nœuds composant un réseau IP. Néanmoins, la procédure décrite permet de rediriger les fonctionnalités PEP embarquées dans certains nœuds vers d'autres PDP une fois la topologie du réseau IP découverte et compte tenu des fonctions supportées par les nœuds, telles que décrites auprès du nœud PDP. Par exemple, un message UNICAST_IM_PDP peut être envoyé vers un nœud du réseau sans que celui-ci sollicite le PDP. L'envoi d'un message UNICAST_IM_PDP non sollicité peut être motivé par la détection de duplication d'adresses de type lien local, changement d'adresse IP du PDP, installation d'une nouvelle politique, mise à jour de la liste d'adresses déléguées PEER_LOOPBACK_IP_ADDRESS_POOL, etc.

Le message UNICAST_IM_PDP peut contenir un drapeau pointant vers une interface indiquant à un nœud PEP de re-générer une adresse de type lien local ou d'utiliser l'adresse de type lien local indiquée dans le message, qui utilise pour ce faire les paramètres INTERFACE_INDEX, LINK_LOCAL_RESET, et ALTERNATE_LL. Plusieurs interfaces peuvent être reconfigurées avec le même message UNICAST_IM_PDP.

Le message UNICAST_IM_PDP peut aussi indiquer l'identité d'un (ou plusieurs autres) nœuds PDP responsable d'autres domaines de décision (par exemple remontée de compteurs réseaux), par exemple sous la forme suivante : (ALTERNATE_PDP : adresse IP, ACTION). La variable ACTION indique au nœud PEP l'action à entreprendre auprès de cet autre nœud PDP. Un exemple d'action est d'envoyer immédiatement le message UNICAST_ARE_YOU_PDP à ce nouveau nœud PDP. A noter que plusieurs paires (ALTERNATE_PDP : adresse IP, ACTION) peuvent être incluses dans le même message UNICAST_IM_PDP.

Le nœud PDP peut aussi envoyer le message UNICAST_IM_PDP à un nœud du réseau pour mettre à jour la liste d'adresses déléguées (PEER_LOOPBACK_IP_ADDRESS_POOL). Le nœud PEP doit alors utiliser cette nouvelle liste pour allouer des adresses à ses voisins immédiats.

Le nœud PDP peut aussi envoyer le message UNICAST_IM_PDP() à un nœud du réseau pour changer l'adresse de l'interface virtuelle d'un nœud IP.

Pour des besoins de sécurité, un secret partagé peut être échangé entre le nœud PDP et chaque nœud PEP découvert (par exemple via le message UNICAST_IM_PDP), sur la base d'un processus (dynamique) de gestion de clés. Cette clé est utilisée pour générer un condensé (haché) de sécurité utilisé lors de la bascule de PDP d'un PDP principal vers un PDP secondaire. Concrètement, un autre PDP identifié par une autre adresse IP que celle utilisée lors de la procédure de découverte de topologie peut prendre le relais en envoyant un message UNICAST_IM_PDP vers un nœud du réseau et en incluant un condensé de sécurité utilisant la clé partagée. Une fois ce message reçu par un nœud PEP, celui-ci vérifie le condensé de sécurité à l'aide de la clé partagée. Si la vérification permet de confirmer l'identité du PDP secondaire, alors le nœud PEP accepte les instructions de ce nouveau PDP ; sinon le message est ignoré.

Plusieurs PDP mettant en œuvre des algorithmes de décision différents peuvent être déployés dans un même réseau. Bien que le présent mode de réalisation se focalise sur le comportement du PDP (ou des PDP) responsable de la découverte de la topologie, de la configuration d'un ensemble de fonctions IP, y compris les fonctions de routage (avec ou sans contraintes TE (« Traffic Engineering »)), d'autres PDP capables de prendre d'autres décisions peuvent être activés. Par exemple, un autre PDP peut être responsable de placer des filtres d'interception légale, de collecter les tickets de facturation, etc. Ces PDP ont besoin des informations de configuration du réseau (maintenues par le PDP comme décrit selon ce mode de réalisation) ainsi que les capacités de chaque nœud IP du réseau. Une interface de communication dédiée entre les PDP peut être activée pour l'échange d'informations et/ou la coordination en vue de prises de décision impliquant plusieurs PDP. L'orchestration des PDP peut être automatisée ou guidée par l'intervention d'un opérateur humain.

Un mode de réalisation automatique de la découverte de PDP (et de leurs capacités fonctionnelles) est l'utilisation d'un canal multicast dédié sur lequel seuls les PDP peuvent émettre et écouter. Un PDP peut alors joindre ou quitter le groupe de PDP en envoyant un message diffusé à ses PDP pairs. A la réception du message multicast, un PDP garde en mémoire l'adresse unicast utilisée pour envoyer le message de diffusion ainsi que les fonctions du PDP ayant émis le message de diffusion. Ces enregistrements seront sollicités par le PDP pour déterminer le PDP responsable d'opérations données. Ce canal permet à un PDP de récupérer la topologie du réseau ainsi que la configuration du réseau.

### 5.3 Exemples d'application

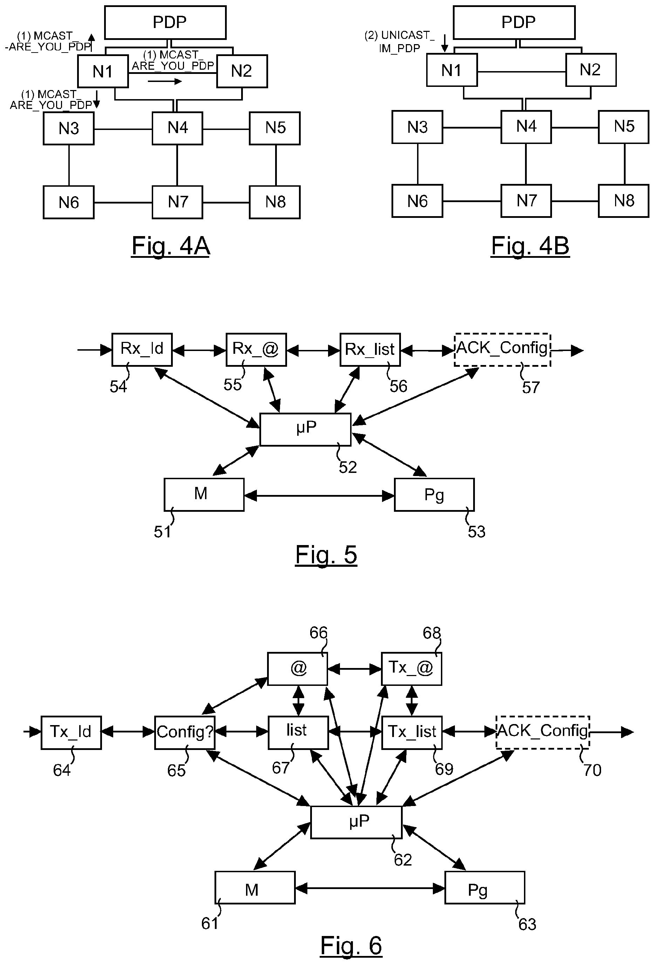

On présente à présent, en relation avec les figures 4A et 4B, les différents messages transmis entre les différents équipements d'un réseau.

Comme illustré en figure 4A, on suppose que l'équipement associé au nœud N1 vient de rejoindre le réseau. On suppose également que chaque nœud alloue automatiquement une ou plusieurs adresses IP de type lien local pour chacune de ses interfaces actives.

A l'initialisation, le nœud N1 émet un message de demande de configuration MCAST_ARE_YOU_PDP sur l'ensemble de ses interfaces actives, c'est-à-dire vers le nœud PDP, le nœud N2 et le nœud N4. Ce message contient aussi des informations de configuration courantes du nœud N1 (par exemple : la liste des interfaces actives de N1, leurs adresses de type lien-local, leurs adresses MAC, les adresses IP/MAC des voisins sur chaque lien actif (c'est-à-dire interfaces N1-PDP, N1-N2 et N1-N4)).

Comme le nœud PDP est directement connecté au nœud N1 (voisin immédiat, encore appelé **nœud non-découvert directement-connecté**), le nœud PDP répond avec un message UNICAST_IM_PDP, comme illustré en figure 4B. Le nœud N1 peut ainsi identifier le nœud PDP embarquant des fonctionnalités de prise de décision à partir du message UNICAST_IM_PDP transmis par le nœud PDP. Le message UNICAST_IM_PDP porte également au moins une adresse IP à allouer à une interface du nœud N1, par exemple à son interface virtuelle. Le message UNICAST_IM_PDP peut également transmettre au nœud N1 une liste d'au moins une adresse IP disponible destinée à être allouée à au moins un autre nœud non-découvert directement connecté au nœud N1 dans le réseau (i.e. les nœuds N2 et N4), dite liste d'adresses déléguées. Le nœud N1 transmet alors optionnellement au nœud PDP le message UNICAST_CONFIG_ACK comprenant des informations de configuration mises à jour du nœud N1.

A l'issue de cette procédure, le PDP a découvert la liste des interfaces actives du nœud N1, leurs adresses de lien local, leurs adresses MAC, les adresses IP/MAC des voisins sur chaque lien actif (c'est-à-dire interfaces N1-PDP, N1-N2 et N1-N4), et le nœud N1 est considéré comme « découvert ».

Si les nœuds N2 et N4 ne sont pas connus du nœud PDP, alors le PDP peut renvoyer dans un message UNICAST_IM_PDP à destination de N1 une liste d'adresses déléguées comprenant par exemple deux adresses unicast destinées à être allouées aux nœuds N2 et N4 (PEER_LOOPBACK_IP_ADDRESS = {IP@1, IP@2}).

On suppose maintenant que l'équipement associé au nœud N4 est mis sous alimentation. Le nœud N4 est directement connecté au nœud N1, qui connaît l'identité du nœud PDP, mais n'est pas directement connecté au nœud PDP. Le nœud N4 est donc un nœud **non-découvert indirectement-connecté.**

Le nœud N4 envoie le message de demande de configuration MCAST_ARE_YOU_PDP vers ses voisins (N1, N2, N3, N5 et N7). Comme le nœud N1 a été déjà configuré (est déjà découvert), le nœud N1 répond avec le message LL_PDP_IS : ce message contient l'adresse IP du nœud PDP ainsi que l'adresse IP@1. Il permet donc d'identifier le nœud du réseau embarquant des fonctionnalités de prise de décision et d'allouer au nœud N4 une adresse IP, distincte d'une adresse de type lien local.

Le nœud N4 configure l'adresse IP@1 à son interface virtuelle et envoie le message UNICAST_ARE_YOU_PDP à l'adresse du PDP. Ce message UNICAST_ARE_YOU_PDP comprend des informations de configuration courantes du nœud N4. Il est envoyé vers le nœud N1 qui se charge de le transférer vers le PDP. Le PDP répond alors directement au nœud N4 en lui transmettant un message UNICAST_IM_PDP, comprenant une liste d'au moins une adresse IP disponible destinée à être allouée à au moins un autre nœud directement connecté au nœud N4 (i.e. les nœuds N2, N3, N5, et N7).

Optionnellement, le nœud N4 transmet au nœud PDP le message UNICAST_CONFIG_ACK comprenant des informations de configuration mises à jour du nœud N4.

Ces différentes étapes peuvent être répétées par l'ensemble des nœuds jusqu'à ce qu'ils soient tous connus du nœud PDP.

En parallèle, on note que le nœud PDP peut envoyer à intervalles de temps réguliers (par exemple toutes les 30 secondes) le message MCAST_IM_PDP. On note à cet effet qu'il n'y a pas de chronologie spécifique entre l'envoi de ce message MCAST_IM_PDP de la part du PDP et l'envoi des messages de type MCAST_ARE_YOU_PDP ou UNICAST_ARE_YOU_PDP de la part des nœuds PEP.

L'invention trouve des applications dans de nombreux domaines.

A titre d'exemple, l'invention trouve des applications dans le domaine de la construction et de la gestion des réseaux domestiques ou des réseaux d'entreprise hiérarchiques où l'un des routeurs, connectant le réseau local avec un réseau externe, embarque une fonction PDP alors que tous les autres nœuds embarquent une fonction PEP. Dans le cas d'un réseau d'entreprise, le PDP peut être embarqué dans un autre élément réseau que le routeur qui raccorde le réseau d'entreprise au réseau large bande. La technique selon l'invention garantit ainsi une cohérence de la politique de configuration des fonctions IP à l'échelle du réseau de l'entreprise ou du réseau domestique, ainsi que la construction de tables de routage sans intervention de l'utilisateur ni l'activation de protocole de routage. De plus, la technique proposée permet d'appliquer des politiques telles que diriger les demandes de service vers la machine la plus proche (par exemple l'imprimante de l'étage). De ce fait, la technique proposée contribue à l'amélioration de l'expérience client, grâce à l'introduction d'un niveau d'automatisation élevé dans le processus de production des services réseau.

Selon un autre exemple, l'invention peut être mise en œuvre pour faire face à des demandes d'augmentation de capacité réseau temporaires (par exemple lors de manifestations sportives pendant un mois ou une semaine). Dans cette situation, un réseau peut être étendu de manière simple et efficace grâce à la mise en œuvre de l'invention. Les nœuds « greffés » au réseau peuvent ainsi acquérir leurs configurations et assurer le service de connectivité (avec ou sans mise en place d'une politique d'ingénierie de trafic) sans intervention d'un opérateur humain ni activation de protocole de routage distribué. La technique proposée permet ainsi d'automatiser la mise en place d'une politique de planification de réseau à la demande, d'où une perspective de réduction des coûts opérationnels (dont les coûts de maintenance).

L'invention peut donc être mise en œuvre sur un réseau existant, ou pour la construction d'un nouveau réseau, dans un réseau fixe ou mobile, etc.

### 5.4 Structure des équipements selon l'invention

On présente finalement, en relation avec les figures 5 et 6 respectivement, la structure simplifiée d'un équipement d'un réseau embarquant des fonctionnalités d'exécution d'une décision (PEP) et la structure simplifiée d'un équipement d'un réseau embarquant des fonctionnalités de prise de décision (PDP).

Comme illustré en figure 5, un équipement d'un réseau embarquant des fonctionnalités d'exécution d'une décision, dit nœud PEP, comprend une mémoire 51 comprenant une mémoire tampon, une unité de traitement 52, équipée par exemple d'un microprocesseur µP, et pilotée par le programme d'ordinateur 53, mettant en œuvre le procédé de configuration selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins un message de la part d'un nœud PDP ou d'autre nœud du réseau possédant une adresse IP et connaissant l'adresse IP du nœud PDP. Le microprocesseur de l'unité de traitement 52 met en œuvre les étapes du procédé de configuration décrit précédemment, selon les instructions du programme d'ordinateur 53, pour identifier le nœud PDP, allouer une adresse IP au nœud PEP, et transmettre au nœud PDP les informations de configuration du nœud PEP. Pour cela, le nœud PEP comprend, outre la mémoire tampon 51, un module d'identification 54 du nœud PDP, un module d'allocation 55 au nœud PEP d'au moins une adresse IP, un module d'obtention 56 d'une liste d'adresses déléguées, ainsi que, optionnellement, un module de transmission 57 au nœud PDP d'un message comprenant des informations de configuration mises à jour du nœud PEP. Ces modules sont pilotés par le microprocesseur de l'unité de traitement 52.

Comme illustré en figure 6, un équipement d'un réseau embarquant des fonctionnalités de prise de décision, dit nœud PDP, comprend une mémoire 61 comprenant une mémoire tampon, une unité de traitement 62, équipée par exemple d'un microprocesseur µP, et pilotée par le programme d'ordinateur 63, mettant en œuvre le procédé de gestion selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 dispose d'un ensemble d'adresses IP à allouer aux équipements du réseau. Le microprocesseur de l'unité de traitement 62 met en œuvre les étapes du procédé de gestion décrit précédemment, selon les instructions du programme d'ordinateur 63, pour configurer des nœuds PEP. Pour cela, le nœud PDP comprend, outre la mémoire tampon 61, un module de transmission 64 d'un message permettant d'identifier le nœud PDP, un module de réception 65 d'un message de demande de configuration de la part d'un nœud PEP, un module de sélection 66 d'au moins une adresse IP à allouer à un nœud PEP directement-connecté, un module de sélection 67 d'une liste d'adresses déléguées, un module de transmission 68 à un nœud PEP directement-connecté de ladite au moins une adresse IP sélectionnée, un module de transmission 69 à un nœud PEP de ladite liste d'adresses déléguées sélectionnée, et, optionnellement un module de réception 70 d'un message comprenant des informations de configuration mises à jour de la part d'un nœud PEP. Ces modules sont pilotés par le microprocesseur de l'unité de traitement 62.

## Revendications

1. Procédé de configuration d'un réseau comprenant un nœud embarquant des fonctionnalités de prise de décision, dit nœud PDP, et au moins deux nœuds embarquant des fonctionnalités d'exécution d'une décision, dits nœuds PEP, dont au moins un premier nœud PEP directement connecté au nœud PDP et au moins un deuxième nœud PEP non directement connecté au nœud PDP,
**caractérisé en ce qu'**il met en œuvre les étapes suivantes :
• au niveau d'un premier nœud PEP directement connecté au nœud PDP :
- identification (21) dudit nœud PDP, à partir d'un message reçu par ledit premier nœud PEP et transmis par ledit nœud PDP,
- transmission audit nœud PDP, d'un message de demande de configuration, comprenant des informations de configuration dudit premier nœud PEP, lesdites informations de configuration comprenant une liste des interfaces actives dudit premier nœud PEP,
- allocation (22) audit premier nœud PEP d'au moins une adresse IP, distincte d'une adresse de lien local, transmise par ledit nœud PDP dans un message de réponse à la demande de configuration, ladite au moins une adresse IP étant obtenue à partir d'un ensemble d'adresses connues dudit nœud PDP, et
- obtention (23) d'une liste d'adresses IP disponibles destinées à être allouées, par ledit premier nœud PEP, aux autres nœuds directement connectés audit premier nœud PEP dans ledit réseau via chacune des interfaces actives de ladite liste des interfaces actives et ne possédant pas d'adresse IP, dit nœuds non-découverts, ladite liste étant constituée d'une adresse IPv4 ou d'une adresse IPv6 ou des deux pour chaque nœud non-découvert, ladite liste étant obtenue à partir dudit ensemble d'adresses et transmise par ledit nœud PDP dans ledit message de réponse à la demande de configuration,
• au niveau d'un deuxième nœud PEP non directement connecté au nœud PDP :
- transmission à au moins un nœud directement connecté audit deuxième nœud PEP, dit nœud voisin, d'un message de découverte du nœud PDP,
- identification (21) dudit nœud PDP, à partir d'un message de réponse audit message reçu par ledit deuxième nœud PEP et transmis par un autre nœud PEP dudit réseau possédant une adresse IP et connaissant l'adresse IP dudit nœud PDP, dit nœud découvert, directement connecté audit deuxième nœud PEP,
- allocation (22) audit deuxième nœud PEP, par ledit nœud découvert, d'au moins une adresse IP, distincte d'une adresse de lien local, sélectionnée parmi une liste d'au moins une adresse IP disponible préalablement obtenue par ledit nœud découvert, ladite au moins une adresse IP étant obtenue à partir d'un ensemble d'adresses connues dudit nœud PDP et transmise par ledit autre nœud PEP dans le message de réponse,
- transmission, audit nœud PDP, d'un message de demande de confirmation qu'il agit comme un nœud PDP, comprenant des informations de configuration dudit deuxième nœud PEP, lesdites informations de configuration comprenant une liste des interfaces actives dudit premier nœud PEP ; et
- obtention (23) d'une liste d'adresses IP disponibles destinées à être allouées, par ledit deuxième nœud PEP, aux autres nœud PEP directement connectés audit deuxième nœud PEP dans ledit réseau via chacune des interfaces actives de ladite liste des interfaces actives et ne possédant pas d'adresse IP, dit nœuds non-découverts, ladite liste étant constituée d'une adresse IPv4 ou d'une adresse IPv6 ou des deux pour chaque nœud non-découvert, ladite liste étant obtenue à partir dudit ensemble d'adresses et transmise par ledit nœud PDP audit deuxième nœud PEP dans un message de réponse à ladite demande de confirmation.

2. Procédé de configuration selon la revendication 1, **caractérisé en ce que** ledit procédé met en œuvre une étape de transmission à au moins un nœud directement connecté audit nœud PEP, directement ou non directement connecté au nœud PDP, dit nœud voisin, d'un message de demande de configuration demandant si ledit nœud voisin est ledit nœud PDP.

3. Procédé de configuration selon l'une quelconque des revendications 1 et 2, **caractérisé en ce que**, ladite étape d'identification (21) met en œuvre la réception par ledit premier nœud PEP d'un message émis par ledit nœud PDP comprenant ladite au moins une adresse IP à allouer audit premier nœud PEP, et ladite liste.

4. Procédé de configuration selon la revendication 3, **caractérisé en ce qu'**il comprend une étape de sélection d'au moins une adresse IP disponible parmi ladite liste et une étape de transmission à un nœud PEP non-découvert directement connecté audit premier nœud PEP d'un message comprenant une adresse dudit nœud PDP et ladite au moins une adresse IP sélectionnée destinée à être allouée audit nœud non-découvert.

5. Procédé de configuration selon l'une quelconque des revendications 1 et 2, **caractérisé en ce que**, si ledit deuxième nœud PEP est directement connecté à au moins un nœud PEP découvert, ladite étape d'identification (21) met en œuvre la réception par ledit deuxième nœud PEP dudit au moins un message de réponse audit message de découverte du nœud PDP émis par ledit au moins un nœud découvert et comprenant une adresse dudit nœud PDP, ladite au moins une adresse IP à allouer audit deuxième nœud PEP, sélectionnée par ledit au moins un nœud découvert parmi ladite liste, préalablement reçue par ledit au moins un nœud découvert.

6. Procédé de configuration selon l'une quelconque des revendications 1 à 5, **caractérisé en ce que** ledit message reçu par ledit premier ou deuxième nœud PEP lors de ladite étape d'identification (21) comprend un indicateur signalant si l'émetteur du message est ledit nœud PDP.

7. Procédé de configuration selon l'une quelconque des revendications 1 à 6, **caractérisé en ce qu'**il comprend une étape de mise à jour d'au moins une table d'acheminement associée audit premier ou deuxième nœud PEP comprenant des informations de configuration des nœuds voisins dudit premier ou deuxième nœud PEP.

8. Procédé de gestion d'un réseau mis en œuvre au niveau d'un nœud dudit réseau embarquant des fonctionnalités de prise de décision, dit nœud PDP,
**caractérisé en ce qu'**il met en œuvre les étapes suivantes :
• pour la configuration de premiers nœuds PEP, embarquant des fonctionnalités d'exécution d'une décision, directement connectés au nœud PDP :
- transmission (31), à au moins un premier nœud PEP directement connecté audit nœud PDP et ne possédant pas d'adresse IP, dit nœud PEP non-découvert directement-connecté, d'un message lui permettant d'identifier ledit nœud PDP,
- réception (32) d'un message de demande de configuration de la part dudit nœud PEP non-découvert directement-connecté, ledit message portant des informations de configuration dudit nœud PEP non-découvert directement-connecté, lesdites informations de configuration comprenant une liste des interfaces actives dudit premier nœud PEP,
- sélection (33) d'au moins une adresse IP à allouer audit nœud PEP non-découvert directement-connecté, parmi un ensemble d'adresses connues dudit nœud PDP, et sélection d'une liste d'adresses IP disponibles destinées à être allouées aux autres nœuds PEP directement connectés au nœud non-découvert directement-connecté dans ledit réseau via chacune des interfaces actives de ladite liste des interfaces actives et ne possédant pas d'adresse IP, dits nœuds non-découverts, ladite liste étant constituée d'une adresse IPv4 ou d'une adresse IPv6 ou des deux pour chaque nœud non-découvert, la liste étant obtenue à partir dudit ensemble d'adresses, et
- transmission (34) audit nœud PEP non-découvert directement-connecté de ladite au moins une adresse IP sélectionnée et de ladite liste dans un message de réponse à la demande de configuration, et
• pour la configuration de deuxièmes nœuds PEP non directement connectés au PDP :
- réception (31') d'un message de demande de confirmation qu'il agit comme un nœud PDP de la part d'au moins un deuxième nœud PEP du réseau non-directement connecté au nœud PDP, dit nœud PEP non-découvert indirectement-connecté, ledit message portant des informations de configuration dudit nœud PEP non-découvert indirectement-connecté, lesdites informations de configuration comprenant une liste des interfaces actives dudit premier nœud PEP,
- sélection (32') d'une liste d'adresses IP disponibles destinées à être allouées aux autres nœuds directement connectés audit nœud non-découvert indirectement-connecté dans ledit réseau via chacune des interfaces actives de ladite liste des interfaces actives et ne possédant pas d'adresse IP, dits nœuds non-découverts, ladite liste étant constituée d'une adresse IPv4 ou d'une adresse IPv6 ou des deux pour chaque nœud non-découvert, la liste étant obtenue à partir d'un ensemble d'adresses connues du nœud PDP, et
- transmission (33') au nœud PEP non-découvert indirectement-connecté de ladite liste dans un message de réponse à la demande de confirmation.

9. Procédé de gestion selon la revendication 8, **caractérisé en ce que** ladite étape de transmission d'un message permettant d'identifier ledit nœud PDP comprend la transmission d'un message multicast à destination des nœuds PEP directement connectés audit nœud PDP à intervalles de temps réguliers, tant qu'au moins une adresse IP n'a pas été allouée à chacun des nœuds PEP directement connectés audit nœud PDP.

10. Procédé de gestion selon l'une quelconque des revendications 8 et 9, **caractérisé en ce qu'**il comprend une étape de mise à jour d'au moins une table de routage suite à la réception desdites informations de configuration.

11. Equipement d'un réseau embarquant des fonctionnalités d'exécution d'une décision, dit nœud PEP,
**caractérisé en ce qu'**il comprend :
- un module d'identification (54) d'un nœud dudit réseau embarquant des fonctionnalités de prise de décision, dit nœud PDP, à partir d'un message reçu par ledit nœud PEP et transmis :
∘ par ledit nœud PDP si ledit nœud PEP est directement connecté au nœud PDP, ou
∘ par un autre nœud PEP dudit réseau possédant une adresse IP et connaissant l'adresse IP dudit nœud PDP, dit nœud découvert, directement connecté audit nœud PEP, si ledit nœud PEP est non-directement connecté au nœud PDP, en réponse à un message de découverte du nœud PDP,
- un module de transmission, apte à transmettre:
∘ si ledit nœud PEP est directement connecté au nœud PDP, un message de demande de configuration comprenant des informations de configuration dudit premier nœud PEP, audit nœud PDP, ou
∘ si ledit nœud PEP est non-directement connecté au nœud PDP, un message au nœud découvert de découverte du nœud PDP et un message au nœud PDP de demande de confirmation qu'il agit comme nœud PDP, ledit message de demande de confirmation comprenant des informations de configuration dudit nœud PEP ;
- un module d'allocation (55) audit nœud PEP d'au moins une adresse IP, distincte d'une adresse de lien local :
∘ transmise par ledit nœud PDP dans un message de réponse audit message de demande de configuration si ledit nœud PEP est directement connecté au nœud PDP, ou
∘ sélectionnée parmi une liste d'au moins une adresse IP disponible préalablement obtenue par ledit nœud découvert et transmise dans un message de réponse au message de découverte du nœud PDP, si ledit nœud PEP est non-directement connecté au nœud PDP,
ladite au moins une adresse IP étant obtenue à partir d'un ensemble d'adresses connues dudit nœud PDP,
et
- un module d'obtention (56) d'une liste d'adresses IP disponibles destinées à être allouées, par ledit nœud PEP, aux autres nœuds PEP directement connectés audit nœud PEP dans ledit réseau et ne possédant pas d'adresse IP, dit nœuds non-découverts, ladite liste étant constituée d'une adresse IPv4 ou d'une adresse IPv6 ou des deux pour chaque nœud non-découvert, ladite liste étant obtenue à partir dudit ensemble d'adresses et transmise par ledit nœud PDP
∘ dans ledit message de réponse à la demande de configuration, si ledit nœud PEP est directement connecté au nœud PDP,
∘ dans un message de réponse à la demande de confirmation, si ledit nœud PEP est non-directement connecté au nœud PDP.

12. Equipement d'un réseau embarquant des fonctionnalités de prise de décision, dit nœud PDP,
**caractérisé en ce qu'**il comprend :
- un module de transmission (64), à au moins un nœud PEP, embarquant des fonctionnalités d'exécution d'une décision, directement connecté audit nœud PDP et ne possédant pas d'adresse IP, dit nœud PEP non-découvert directement-connecté, d'un message lui permettant d'identifier ledit nœud PDP,
- un module de réception (65) d'un message de demande de configuration de la part d'un nœud PEP non-découvert directement-connecté, ou d'un message de demande de confirmation qu'il agit comme nœud PDP de la part d'un nœud PEP du réseau non-directement connecté au nœud PDP, dit nœud non-découvert indirectement-connecté, ledit message portant des informations de configuration dudit nœud PEP, lesdites informations de configuration comprenant une liste des interfaces actives dudit nœud PEP,
- un module de sélection (66) d'au moins une adresse IP à allouer à un nœud non-découvert directement-connecté, parmi un ensemble d'adresses connues dudit nœud PDP, apte à être mis en réponse à la demande de configuration, un module de sélection (67) d'une liste d'adresses IP disponibles destinée à être allouées aux autres nœuds PEP directement connectés audit nœud PEP non-découvert directement-connecté ou indirectement-connecté dans ledit réseau via chacune des interfaces actives de ladite liste des interfaces actives et ne possédant pas d'adresse IP, dits nœuds non-découverts, ladite liste étant constituée d'une adresse IPv4 ou d'une adresse IPv6 ou des deux pour chaque nœud non-découvert, la liste étant obtenue à partir dudit ensemble d'adresses, ledit module étant apte à être mis en œuvre en réponse à la demande de configuration ou à la demande de confirmation,
- un module de transmission (68) audit nœud PEP non-découvert directement-connecté de ladite au moins une adresse IP sélectionnée dans un message de réponse à la demande de configuration, et
- un module de transmission (69) audit nœud PEP non-découvert directement-connecté ou audit nœud PEP non-découvert indirectement-connecté de ladite liste dans ledit message de réponse à la demande de configuration ou dans un message de réponse à la demande de confirmation.

13. Programme d'ordinateur comportant des instructions pour l'exécution des étapes du procédé de configuration selon l'une quelconque des revendications 1 à 7 ou du procédé de gestion l'une quelconque des revendications 8 à 10 lorsque ledit programme est exécuté par un ordinateur.

14. Moyen de stockage de données inamovible, ou partiellement ou totalement amovible, comportant des instructions de code de programme informatique pour l'exécution des étapes du procédé de configuration selon l'une quelconque des revendications 1 à 7 ou du procédé de gestion l'une quelconque des revendications 8 à 10.

## Patentansprüche

1. Verfahren zur Konfiguration eines Netzes, das einen mit Funktionalitäten der Entscheidungsfindung ausgestatteten Knoten, PDP-Knoten genannt, und wenigstens zwei mit Funktionalitäten der Ausführung einer Entscheidung ausgestattete Knoten, PEP-Knoten genannt, von denen wenigstens ein erster PEP-Knoten direkt mit dem PDP-Knoten verbunden ist und wenigstens ein zweiter PEP-Knoten nicht direkt mit dem PDP-Knoten verbunden ist, umfasst,
**dadurch gekennzeichnet, dass** es die folgenden Schritte implementiert:
• an einem ersten PEP-Knoten, der direkt mit dem PDP-Knoten verbunden ist:
- Identifikation (21) des PDP-Knotens anhand einer Nachricht, die durch den ersten PEP-Knoten empfangen und durch den PDP-Knoten gesendet wurde,
- Senden, an den PDP-Knoten, einer Konfigurationsanforderungsnachricht, die Konfigurationsinformationen des ersten PEP-Knotens umfasst, wobei die Konfigurationsinformationen eine Liste der aktiven Schnittstellen des ersten PEP-Knotens umfassen,
- Zuweisung (22), zu dem ersten PEP-Knoten, wenigstens einer von einer Link-Local-Adresse verschiedenen IP-Adresse, die durch den PDP-Knoten in einer Antwortnachricht auf die Konfigurationsanforderung gesendet wird, wobei die wenigstens eine IP-Adresse aus einer Menge von dem PDP-Knoten bekannten Adressen gewonnen wird, und
- Gewinnung (23) einer Liste verfügbarer IP-Adressen, die dazu bestimmt sind, durch den ersten PEP-Knoten den anderen Knoten zugewiesen zu werden, die mit dem ersten PEP-Knoten in dem Netz über irgendeine der aktiven Schnittstellen der Liste der aktiven Schnittstellen direkt verbunden sind und keine IP-Adresse besitzen, nicht entdeckte Knoten genannt, wobei die Liste aus einer IPv4-Adresse oder aus einer IPv6-Adresse oder beidem für jeden nicht entdeckten Knoten besteht, wobei die Liste aus der Menge von Adressen gewonnen wird und durch den PDP-Knoten in der Antwortnachricht auf die Konfigurationsanforderung gesendet wird,
• an einem zweiten PEP-Knoten, der nicht direkt mit dem PDP-Knoten verbunden ist:
- Senden, an wenigstens einen mit dem zweiten PEP-Knoten direkt verbundenen Knoten, benachbarter Knoten genannt, einer Nachricht über die Entdeckung des PDP-Knotens,
- Identifikation (21) des PDP-Knotens anhand einer Antwortnachricht auf die Nachricht, die durch den zweiten PEP-Knoten empfangen und durch einen anderen PEP-Knoten des Netzes, der eine IP-Adresse besitzt und die IP-Adresse des PDP-Knotens kennt, entdeckter Knoten genannt, der mit dem zweiten PEP-Knoten direkt verbunden ist, gesendet wurde,
- Zuweisung (22), zu dem zweiten PEP-Knoten durch den entdeckten Knoten, wenigstens einer von einer Link-Local-Adresse verschiedenen IP-Adresse, die aus einer Liste von wenigstens einer verfügbaren IP-Adresse ausgewählt ist, die zuvor durch den entdeckten Knoten gewonnen wurde, wobei die wenigstens eine IP-Adresse aus einer Menge von dem PDP-Knoten bekannten Adressen gewonnen wird und durch den anderen PEP-Knoten in der Antwortnachricht gesendet wird,
- Senden, an den PDP-Knoten, einer Bestätigungsanforderungsnachricht, dass er als ein PDP-Knoten agiert, die Konfigurationsinformationen des zweiten PEP-Knotens umfasst, wobei die Konfigurationsinformationen eine Liste der aktiven Schnittstellen des ersten PEP-Knotens umfassen; und
- Gewinnung (23) einer Liste verfügbarer IP-Adressen, die dazu bestimmt sind, durch den zweiten PEP-Knoten den anderen PEP-Knoten zugewiesen zu werden, die mit dem zweiten PEP-Knoten in dem Netz über irgendeine der aktiven Schnittstellen der Liste der aktiven Schnittstellen direkt verbunden sind und keine IP-Adresse besitzen, nicht entdeckte PEP-Knoten genannt, wobei die Liste aus einer IPv4-Adresse oder aus einer IPv6-Adresse oder beidem für jeden nicht entdeckten Knoten besteht, wobei die Liste aus der Menge von Adressen gewonnen wird und durch den PDP-Knoten an den zweiten PEP-Knoten in einer Antwortnachricht auf die Bestätigungsanforderung gesendet wird.

2. Konfigurationsverfahren nach Anspruch 1, **dadurch gekennzeichnet, dass** das Verfahren einen Schritt des Sendens, an wenigstens einen Knoten, der direkt mit dem PEP-Knoten verbunden ist, welcher direkt oder nicht direkt mit dem PDP-Knoten verbunden ist, benachbarter Knoten genannt, einer Konfigurationsanforderungsnachricht, die anfragt, ob der benachbarte Knoten der PDP-Knoten ist.

3. Konfigurationsverfahren nach einem der Ansprüche 1 und 2, **dadurch gekennzeichnet, dass** der Schritt der Identifikation (21) den Empfang, durch den ersten PEP-Knoten, einer durch den PDP-Knoten gesendeten Nachricht implementiert, welche die wenigstens eine IP-Adresse, die dem ersten PEP-Knoten zugewiesen werden soll, und die Liste umfasst.

4. Konfigurationsverfahren nach Anspruch 3, **dadurch gekennzeichnet, dass** es einen Schritt der Auswahl wenigstens einer verfügbaren IP-Adresse aus der Liste umfasst, sowie einen Schritt des Sendens, an einen mit dem ersten PEP-Knoten direkt verbundenen nicht entdeckten PEP-Knoten, einer Nachricht, die eine Adresse des PDP-Knotens und die wenigstens eine ausgewählte IP-Adresse, die dazu bestimmt ist, dem nicht entdeckten Knoten zugewiesen zu werden, umfasst.

5. Konfigurationsverfahren nach einem der Ansprüche 1 und 2, **dadurch gekennzeichnet, dass**, falls der zweite PEP-Knoten mit wenigstens einem entdeckten PEP-Knoten direkt verbunden ist, der Schritt der Identifikation (21) den Empfang, durch den zweiten PEP-Knoten, der wenigstens einen Antwortnachricht auf die Nachricht über die Entdeckung des PDP-Knotens implementiert, die durch den wenigstens einen entdeckten Knoten gesendet wurde und eine Adresse des PDP-Knotens, die wenigstens eine IP-Adresse, die dem zweiten PEP-Knoten zugewiesen werden soll und durch den wenigstens einen entdeckten Knoten aus der Liste ausgewählt wird, die zuvor durch den wenigstens einen entdeckten Knoten empfangen wurde, umfasst.

6. Konfigurationsverfahren nach einem der Ansprüche 1 bis 5, **dadurch gekennzeichnet, dass** die Nachricht, die durch den ersten oder zweiten PEP-Knoten im Schritt der Identifikation (21) empfangen wird, einen Indikator umfasst, der anzeigt, ob der Sender der Nachricht der PDP-Knoten ist.

7. Konfigurationsverfahren nach einem der Ansprüche 1 bis 6, **dadurch gekennzeichnet, dass** es einen Schritt der Aktualisierung wenigstens einer dem ersten oder zweiten PEP-Knoten zugeordneten Routingtabelle umfasst, die Konfigurationsinformationen der benachbarten Knoten des ersten oder zweiten PEP-Knotens umfasst.

8. Verfahren zur Verwaltung eines Netzes, das an einem mit Funktionalitäten der Entscheidungsfindung ausgestatteten Knoten des Netzes, PDP-Knoten genannt, durchgeführt wird, **dadurch gekennzeichnet, dass** es die folgenden Schritte implementiert:
• zur Konfiguration von mit Funktionalitäten der Ausführung einer Entscheidung ausgestatteten ersten PEP-Knoten, die direkt mit dem PDP-Knoten verbunden sind:
- Senden (31), an wenigstens einen ersten PEP-Knoten, der mit dem PDP-Knoten direkt verbunden ist und keine IP-Adresse besitzt, nicht entdeckter direkt verbundener PEP-Knoten genannt, einer Nachricht, die ihm ermöglicht, den PDP-Knoten zu identifizieren,
- Empfang (32) einer Konfigurationsanforderungsnachricht von dem nicht entdeckten direkt verbundenen PEP-Knoten, wobei die Nachricht Konfigurationsinformationen des nicht entdeckten direkt verbundenen PEP-Knotens transportiert, wobei die Konfigurationsinformationen eine Liste der aktiven Schnittstellen des ersten PEP-Knotens umfassen,
- Auswahl (33) wenigstens einer IP-Adresse, die die dem nicht entdeckten direkt verbundenen PEP-Knoten zugewiesen werden soll, aus einer Menge von dem PDP-Knoten bekannten Adressen und Auswahl einer Liste verfügbarer IP-Adressen, die dazu bestimmt sind, den anderen PEP-Knoten zugewiesen zu werden, die mit dem nicht entdeckten direkt verbundenen PEP-Knoten in dem Netz über irgendeine der aktiven Schnittstellen der Liste der aktiven Schnittstellen direkt verbunden sind und keine IP-Adresse besitzen, nicht entdeckte Knoten genannt, wobei die Liste aus einer IPv4-Adresse oder aus einer IPv6-Adresse oder beidem für jeden nicht entdeckten Knoten besteht, wobei die Liste aus der Menge von Adressen gewonnen wird, und
- Senden (34), an den nicht entdeckten direkt verbundenen PEP-Knoten, der wenigstens einen ausgewählten IP-Adresse und der Liste in einer Antwortnachricht auf die Konfigurationsanforderung, und
• zur Konfiguration von zweiten PEP-Knoten, die nicht direkt mit dem PDP-Knoten verbunden sind:
- Empfang (31') einer Bestätigungsanforderungsnachricht, dass er als ein PDP-Knoten agiert, von wenigstens einem zweiten PEP-Knoten des Netzes, der nicht direkt mit dem PDP-Knoten verbunden ist, nicht entdeckter indirekt verbundener PEP-Knoten genannt, wobei die Nachricht Konfigurationsinformationen des nicht entdeckten indirekt verbundenen PEP-Knotens transportiert, wobei die Konfigurationsinformationen eine Liste der aktiven Schnittstellen des ersten PEP-Knotens umfassen,
- Auswahl (32') einer Liste verfügbarer IP-Adressen, die dazu bestimmt sind, den anderen Knoten zugewiesen zu werden, die mit dem nicht entdeckten indirekt verbundenen Knoten in dem Netz über irgendeine der aktiven Schnittstellen der Liste der aktiven Schnittstellen direkt verbunden sind und keine IP-Adresse besitzen, nicht entdeckte Knoten genannt, wobei die Liste aus einer IPv4-Adresse oder aus einer IPv6-Adresse oder beidem für jeden nicht entdeckten Knoten besteht, wobei die Liste aus einer Menge von dem PD-Knoten bekannten Adressen gewonnen wird, und
- Senden (33'), an den nicht entdeckten indirekt verbundenen PEP-Knoten, der Liste in einer Antwortnachricht auf die Bestätigungsanforderung.

9. Verwaltungsverfahren nach Anspruch 8, **dadurch gekennzeichnet, dass** der Schritt des Sendens einer Nachricht, die es ermöglicht, den PDP-Knoten zu identifizieren, das Senden einer Multicast-Nachricht an die mit dem PDP-Knoten direkt verbundenen PEP-Knoten in regelmäßigen Zeitintervallen, solange nicht jedem der mit dem PDP-Knoten direkt verbundenen PEP-Knoten wenigstens eine IP-Adresse zugewiesen worden ist, umfasst.

10. Verwaltungsverfahren nach einem der Ansprüche 8 und 9, **dadurch gekennzeichnet, dass** es einen Schritt der Aktualisierung wenigstens einer Routingtabelle im Anschluss an den Empfang der Konfigurationsinformationen umfasst.

11. Einrichtung eines Netzes, welche mit Funktionalitäten der Ausführung einer Entscheidung ausgestattet ist, PEP-Knoten genannt,
**dadurch gekennzeichnet, dass** sie umfasst:
- ein Modul zur Identifikation (54) eines Knotens des Netzes, der mit Funktionalitäten der Entscheidungsfindung ausgestattet ist, PDP-Knoten genannt, anhand einer Nachricht, die durch den ersten PEP-Knoten empfangen wurde und gesendet wurde:
∘ durch den PDP-Knoten, falls der PEP-Knoten direkt mit dem PDP-Knoten verbunden ist, oder
∘ durch einen anderen PEP-Knoten des Netzes, der eine IP-Adresse besitzt und die IP-Adresse des PDP-Knotens kennt, entdeckter Knoten genannt, der direkt mit dem PEP-Knoten verbunden ist, falls der PEP-Knoten nicht direkt mit dem PDP-Knoten verbunden ist, in Reaktion auf eine Nachricht über die Entdeckung des PDP-Knotens,
- ein Sendemodul, das in der Lage ist zu senden:
∘ falls der PEP-Knoten direkt mit dem PDP-Knoten verbunden ist, eine Konfigurationsanforderungsnachricht, die Konfigurationsinformationen des ersten PEP-Knotens umfasst, an den PDP-Knoten, oder
∘ falls der PEP-Knoten nicht direkt mit dem PDP-Knoten verbunden ist, eine Nachricht über die Entdeckung des PDP-Knotens an den entdeckten Knoten und eine Bestätigungsanforderungsnachricht an den PDP-Knoten, dass er als PDP-Knoten agiert, wobei die Bestätigungsanforderungsnachricht Konfigurationsinformationen des PEP-Knotens umfasst;
- ein Modul zur Zuweisung (55) wenigstens einer von einer Link-Local-Adresse verschiedenen IP-Adresse zu dem PEP-Knoten:
∘ die durch den PDP-Knoten in einer Antwortnachricht auf die Konfigurationsanforderungsnachricht gesendet wird, falls der PEP-Knoten direkt mit dem PDP-Knoten verbunden ist, oder
∘ die aus einer Liste von wenigstens einer verfügbaren IP-Adresse ausgewählt ist, die zuvor durch den entdeckten Knoten gewonnen wurde und in einer Antwortnachricht auf die Nachricht über die Entdeckung des PDP-Knotens gesendet wird, falls der PEP-Knoten nicht direkt mit dem PDP-Knoten verbunden ist,
wobei die wenigstens eine IP-Adresse aus einer Menge von dem PDP-Knoten bekannten Adressen gewonnen wird,
und
- ein Modul zur Gewinnung (56) einer Liste verfügbarer IP-Adressen, die dazu bestimmt sind, durch den PEP-Knoten den anderen PEP-Knoten zugewiesen zu werden, die mit dem PEP-Knoten in dem Netz direkt verbunden sind und keine IP-Adresse besitzen, nicht entdeckte Knoten genannt, wobei die Liste aus einer IPv4-Adresse oder aus einer IPv6-Adresse oder beidem für jeden nicht entdeckten Knoten besteht, wobei die Liste aus der Menge von Adressen gewonnen wird und durch den PDP-Knoten gesendet wird:
∘ in einer Antwortnachricht auf die Konfigurationsanforderung, falls der PEP-Knoten direkt mit dem PDP-Knoten verbunden ist,
∘ in einer Antwortnachricht auf die Bestätigungsanforderung, falls der PEP-Knoten nicht direkt mit dem PDP-Knoten verbunden ist.

12. Einrichtung eines Netzes, welche mit Funktionalitäten der Entscheidungsfindung ausgestattet ist, PDP-Knoten genannt,
**dadurch gekennzeichnet, dass** sie umfasst:
- ein Modul zum Senden (64), an wenigstens einen mit Funktionalitäten der Ausführung einer Entscheidung ausgestatteten PEP-Knoten, der mit dem PDP-Knoten direkt verbunden ist und keine IP-Adresse besitzt, nicht entdeckter direkt verbundener PEP-Knoten genannt, einer Nachricht, die ihm ermöglicht, den PDP-Knoten zu identifizieren,
- ein Modul zum Empfang (65) einer Konfigurationsanforderungsnachricht von dem nicht entdeckten direkt verbundenen PEP-Knoten oder einer Bestätigungsanforderungsnachricht, dass er als PDP-Knoten agiert, von einem PEP-Knoten des Netzes, der nicht direkt mit dem PDP-Knoten verbunden ist, nicht entdeckter indirekt verbundener PEP-Knoten genannt, wobei die Nachricht Konfigurationsinformationen des PEP-Knotens transportiert, wobei die Konfigurationsinformationen eine Liste der aktiven Schnittstellen des PEP-Knotens umfassen,
- ein Modul zur Auswahl (66) wenigstens einer IP-Adresse, die einem nicht entdeckten direkt verbundenen Knoten zugewiesen werden soll, aus einer Menge von dem PDP-Knoten bekannten Adressen, das geeignet ist, in Reaktion auf die Konfigurationsanforderung eingesetzt zu werden, ein Modul zur Auswahl (67) einer Liste verfügbarer IP-Adressen, die dazu bestimmt sind, den anderen PEP-Knoten zugewiesen zu werden, die mit dem nicht entdeckten direkt verbundenen oder indirekt verbundenen in dem Netz über irgendeine der aktiven Schnittstellen der Liste der aktiven Schnittstellen direkt verbunden sind und keine IP-Adresse besitzen, nicht entdeckte Knoten genannt, wobei die Liste aus einer IPv4-Adresse oder aus einer IPv6-Adresse oder beidem für jeden nicht entdeckten Knoten besteht, wobei die Liste aus einer Menge von Adressen gewonnen wird, wobei das Modul geeignet ist, in Reaktion auf die Konfigurationsanforderung oder auf die Bestätigungsanforderung eingesetzt zu werden,
- ein Modul zum Senden (68), an den nicht entdeckten direkt verbundenen PEP-Knoten, der wenigstens einen ausgewählten IP-Adresse in einer Antwortnachricht auf die Konfigurationsanforderung, und
- ein Modul zum Senden (69), an den nicht entdeckten direkt verbundenen PEP-Knoten oder an den nicht entdeckten indirekt verbundenen PEP-Knoten, der Liste in der Antwortnachricht auf die Konfigurationsanforderung oder in einer Antwortnachricht auf die Bestätigungsanforderung.

13. Computerprogramm, welches Anweisungen zur Ausführung der Schritte des Konfigurationsverfahrens nach einem der Ansprüche 1 bis 7 oder des Verwaltungsverfahrens nach einem der Ansprüche 8 bis 10, wenn das Programm von einem Computer ausgeführt wird, umfasst.

14. Nicht wechselbares oder teilweise oder vollständig wechselbares Datenspeichermittel, welches Programmcodeanweisungen zur Ausführung der Schritte des Konfigurationsverfahrens nach einem der Ansprüche 1 bis 7 oder des Verwaltungsverfahrens nach einem der Ansprüche 8 bis 10 umfasst.

## Claims

1. Method for configuring a network comprising a node having embedded decision making functionalities, termed PDP node, and at least two nodes having embedded decision execution functionalities, termed PEP nodes, at least a first of which PEP nodes is directly connected to the PDP node and at least a second of which PEP nodes is non-directly connected to the PDP node,
**characterized in that** it implements the following steps:
• at the level of a first PEP node directly connected to the PDP node:
- identification (21) of said PDP node, on the basis of a message received by said first PEP node and transmitted by said PDP node,
- transmission to said PDP node of a message requesting configuration, comprising configuration information in respect of said first PEP node, said configuration information comprising a list of the active interfaces of said first PEP node,
- allocation (22) to said first PEP node of at least one IP address, distinct from a local link address, transmitted by said PDP node in a message of response to the configuration request, said at least one IP address being obtained on the basis of a set of addresses known from said PDP node, and
- obtaining (23) of a list of available IP addresses intended to be allocated, by said first PEP node, to the other nodes directly connected to said first PEP node in said network via each of the active interfaces of said list of the active interfaces and not possessing an IP address, termed non-discovered nodes, said list consisting of an IPv4 address or of an IPv6 address or of both for each non-discovered node, said list being obtained on the basis of said set of addresses and transmitted by said PDP node in said message of response to the configuration request,
• at the level of a second PEP node non-directly connected to the PDP node:
- transmission to at least one node directly connected to said second PEP node, termed neighbour node, of a message of discovery of the PDP node,
- identification (21) of said PDP node, on the basis of a message of response to said message received by said second PEP node and transmitted by another PEP node of said network possessing an IP address and knowing the IP address of said PDP node, termed discovered node, directly connected to said second PEP node,
- allocation (22) to said second PEP, by said discovered node, of at least one IP address, distinct from a local link address, selected from a list of at least one available IP address previously obtained by said discovered node, said at least one IP address being obtained on the basis of a set of addresses known from said PDP node and transmitted by said other PEP node in the response message,
- transmission, to said PDP node, of a message requesting confirmation that it acts as a PDP node, comprising configuration information in respect of said second PEP node, said configuration information comprising a list of the active interfaces of said first PEP node; and
- obtaining (23) of a list of available IP addresses intended to be allocated, by said second PEP node, to the other PEP nodes directly connected to said second PEP node in said network via each of the active interfaces of said list of the active interfaces and not possessing an IP address, termed non-discovered nodes, said list consisting of an IPv4 address or of an IPv6 address or of both for each non-discovered node, said list being obtained on the basis of said set of addresses and transmitted by said PDP node to said second PEP node in a message of response to said confirmation request.

2. Configuration method according to Claim 1, **characterized in that** said method implements a step of transmission to at least one node directly connected to said PEP node, directly or not directly connected to the PDP node, termed neighbour node, of a message requesting configuration requesting whether said neighbour node is said PDP node.

3. Configuration method according to either of Claims 1 and 2, **characterized in that** said identification step (21) implements the reception by said first PEP node of a message sent by said PDP node comprising said at least one IP address to be allocated to said first PEP node, and said list.

4. Configuration method according to Claim 3, **characterized in that** it comprises a step of selecting at least one available IP address from among said list and a step of transmitting to at least one non-discovered PEP node directly connected to said first PEP node a message comprising an address of said PDP node and said at least one selected IP address intended to be allocated to said non-discovered node.

5. Configuration method according to either of Claims 1 and 2, **characterized in that**, if said second PEP node is directly connected to at least one discovered PEP node, said identification step (21) implements the reception by said second PEP node of said at least one message of response to said message of discovery of the PDP node sent by said at least one discovered node and comprising an address of said PDP node, said at least one IP address to be allocated to said second PEP node, selected by said at least one discovered node from among said list, previously received by said at least one discovered node.

6. Configuration method according to any one of Claims 1 to 5, **characterized in that** said message received by said first or second PEP node during said identification step (21) comprises an indicator signalling whether the sender of the message is said PDP node.

7. Configuration method according to any one of Claims 1 to 6, **characterized in that** it comprises a step of updating at least one routing table associated with said first or second PEP node comprising configuration information in respect of the neighbour nodes of said first or second PEP node.

8. Method for managing a network implemented at the level of a node of said network having embedded decision making functionalities, termed PDP node,
**characterized in that** it implements the following steps:
• for the configuration of first PEP nodes, having embedded functionalities for executing a decision, directly connected to the PDP node:
- transmission (31), to at least one first PEP node directly connected to said PDP node and not possessing an IP address, termed directly connected non-discovered PEP node, of a message allowing it to identify said PDP node,
- reception (32) of a message requesting configuration on the part of said directly connected non-discovered PEP node, said message carrying configuration information in respect of said directly connected non-discovered PEP node, said configuration information comprising a list of the active interfaces of said first PEP node,
- selection (33) of at least one IP address to be allocated to said directly connected non-discovered PEP node, from among a set of addresses known from said PDP node, and selection of a list of available IP addresses intended to be allocated to the other PEP nodes directly connected to the directly connected non-discovered node in said network via each of the active interfaces of said list of the active interfaces and not possessing an IP address, termed non-discovered nodes, said list consisting of an IPv4 address or of an IPv6 address or of both for each non-discovered node, the list being obtained on the basis of said set of addresses, and
- transmission (34) to said directly connected non-discovered PEP node of said at least one selected IP address and of said list in a message of response to the configuration request, and
• for the configuration of second PEP nodes not directly connected to the PDP:
- reception (31') of a message requesting confirmation that it acts as a PDP node on the part of at least one second PEP node of the network non-directly connected to the PDP node, termed indirectly connected non-discovered PEP node, said message carrying configuration information in respect of said indirectly connected non-discovered PEP node, said configuration information comprising a list of the active interfaces of said first PEP node,
- selection (32') of a list of available IP addresses intended to be allocated to the other nodes directly connected to said indirectly connected non-discovered node in said network via each of the active interfaces of said list of the active interfaces and not possessing an IP address, termed non-discovered nodes, said list consisting of an IPv4 address or of an IPv6 address or of both for each non-discovered node, the list being obtained on the basis of a set of addresses known from the PDP node, and
- transmission (33') to the indirectly connected non-discovered PEP node of said list in a message of response to the confirmation request.

9. Management method according to Claim 8, **characterized in that** said step of transmitting a message making it possible to identify said PDP node comprises the transmission of a multicast message destined for the PEP nodes directly connected to said PDP node at regular time intervals, as long as at least one IP address has not been allocated to each of the PEP nodes directly connected to said PDP node.

10. Management method according to either one of Claims 8 and 9, **characterized in that** it comprises a step of updating at least one routing table subsequent to the reception of said configuration information.

11. Equipment of a network having embedded functionalities for executing a decision, termed PEP node,
**characterized in that** it comprises:
- an identification module (54) for identifying a node of said network having embedded decision making functionalities, termed PDP node, on the basis of a message received by said PEP node and transmitted:
∘ by said PDP node if said PEP node is directly connected to the PDP node, or
∘ by another PEP node of said network possessing an IP address and knowing the IP address of said PDP node, termed discovered node, directly connected to said PEP node, if said PEP node is non-directly connected to the PDP node, in response to a message of discovery of the PDP node,
- a transmission module, able to transmit:
∘ if said PEP node is directly connected to the PDP node, a message requesting configuration comprising configuration information in respect of said first PEP node, to said PDP node, or
∘ if said PEP node is non-directly connected to the PDP node, a message to the discovered node of discovery of the PDP node and a message to the PDP node requesting confirmation that it acts as a PDP node, said message requesting confirmation comprising configuration information in respect of said PEP node;
- an allocation module (55) for allocating to said PEP node at least one IP address, distinct from a local link address:
∘ transmitted by said PDP node in a message of response to said configuration request message if said PEP node is directly connected to the PDP node, or
∘ selected from a list of at least one available IP address previously obtained by said discovered node and transmitted in a message of response to the message of discovery of the PDP node, if said PEP node is non-directly connected to the PDP node,
said at least one IP address being obtained on the basis of a set of addresses known from said PDP node,
and
- an obtaining module (56) for obtaining a list of available IP addresses intended to be allocated, by said PEP node, to the other PEP nodes directly connected to said PEP node in said network and not possessing an IP address, termed non-discovered nodes, said list consisting of an IPv4 address or of an IPv6 address or of both for each non-discovered node, said list being obtained on the basis of said set of addresses and transmitted by said PDP node
∘ in said message of response to the configuration request, if said PEP node is directly connected to the PDP node,
∘ in a message of response to the confirmation request, if said PEP node is non-directly connected to the PDP node.

12. Equipment of a network having embedded decision making functionalities, termed PDP node,
**characterized in that** it comprises:
- a transmission module (64) for transmitting, to at least one PEP node, having embedded functionalities for executing a decision, directly connected to said PDP node and not possessing an IP address, termed directly connected non-discovered PEP node, a message allowing it to identify said PDP node,
- a reception module (65) for receiving a message requesting configuration on the part of a directly connected non-discovered PEP node, or of a message requesting confirmation that it acts as a PDP node on the part of a PEP node of the network non-directly connected to the PDP node, termed indirectly connected non-discovered node, said message carrying configuration information in respect of said PEP node, said configuration information comprising a list of the active interfaces of said PEP node,
- a selection module (66) for selecting at least one IP address to be allocated to a directly connected non-discovered node, from among a set of addresses known from said PDP node, able to be instigated in response to the configuration request, a selection module (67) for selecting a list of available IP addresses intended to be allocated to the other PEP nodes directly connected to said directly connected or indirectly connected non-discovered PEP node in said network via each of the active interfaces of said list of the active interfaces and not possessing an IP address, termed non-discovered nodes, said list consisting of an IPv4 address or of an IPv6 address or of both for each non-discovered node, said list being obtained on the basis of said set of addresses, said module being able to be instigated in response to the configuration request or to the confirmation request,
- a transmission module (68) for transmitting to said directly connected non-discovered PEP node said at least one selected IP address in a message of response to the configuration request, and
- a transmission module (69) for transmitting to said directly connected non-discovered PEP node or to said indirectly connected non-discovered PEP node said list in said message of response to the configuration request or in a message of response to the confirmation request.

13. Computer program comprising instructions for the execution of the steps of the configuration method according to any one of Claims 1 to 7 or of the management method according to any one of Claims 8 to 10 when said program is executed by a computer.

14. Irremovable, or partially or totally removable, means of data storage, comprising computer program code instructions for the execution of the steps of the configuration method according to any one of Claims 1 to 7 or of the management method according to any one of Claims 8 to 10.
